# EUROPEAN PATENT SPECIFICATION

(11) **EP 3 897 005 B1**
(45) Date of publication and mention of the grant of the patent: **09.12.2026**
(21) Application number: 19909066.3
(22) Date of filing: 27.12.2019
(51) Int. Cl.: H04W 4/06, H04W 4/46

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 10.01.2019 CN 201910021720
(43) Date of publication of application: 20.10.2021
(73) Proprietor: Huawei Technologies Co., Ltd., Longgang District, Shenzhen, Guangdong 518129 (CN)
(72) Inventor: WANG, Ting, Shenzhen, Guangdong 518129 (CN); TANG, Hao, Shenzhen, Guangdong 518129 (CN); LI, Xinxian, Shenzhen, Guangdong 518129 (CN); TANG, Zhenfei, Shenzhen, Guangdong 518129 (CN)
(74) Representative: Gill Jennings & Every LLP
(86) International application number: PCT/CN2019/129300
(87) International publication number: WO 2020/143482

(56) References cited:
- WO-A2-2018/129017
- CN-A- 108 811 120
- US-A1- 2018 183 551
- INTEL CORPORATION: "Sidelink Physical Layer Structure and Procedures for NR V2X Communication", 3 November 2018 (2018-11-03), pages 1 - 15, XP051478717, Retrieved from the Internet <URL:http://www.3gpp.org/ftp/tsg%5Fran/WG1%5FRL1/TSGR1%5F95/Docs/R1%2D1812488%2Ezip>
- HUAWEI ET AL: "Remaining issues on bandwidth part and wideband operation", vol. RAN WG1, no. Vancouver, Canada; 20180122 - 20180126, 13 January 2018 (2018-01-13), XP051384521, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- HUAWEI ET AL: "Bandwidth Parts and Resource Pools for V2X sidelink", 16 November 2018 (2018-11-16), pages 1 - 12, XP051479893, Retrieved from the Internet <URL:http://www.3gpp.org/ftp/tsg%5Fran/WG1%5FRL1/TSGR1%5F95/Docs/R1%2D1813555%2Ezip>
- HUAWEI; HISILICON: "Bandwidth Parts and Resource Pools for V2X Sidelink.", 3GPP DRAFT; R1-1813555, 16 November 2018 (2018-11-16), Spokane, USA, pages 1 - 12, XP051479893
- INTEL CORPORATION: "Sidelink Physical Layer Structure and Procedures for NR V2X", 3GPP DRAFT; R1-1812488, 16 November 2018 (2018-11-16), pages 1 - 15, XP051478717
- HUAWEI; HISILICON: "Bandwidth Parts and Resource Pools for NR V2X Sidelink.", 3GPP DRAFT; R2-1816973, 16 November 2018 (2018-11-16), Spokane, USA, pages 1 - 4, XP051480908

## Description

### TECHNICAL FIELD

This application relates to the field of communications technologies, and in particular, to a communication method and an apparatus.

### BACKGROUND

In a communications system, for example, in a new radio (new radio, NR) system, terminal device communication may include sidelink (sidelink, SL) communication and Uu air interface communication. The SL communication is communication between terminal devices, and the Uu air interface communication is communication between a terminal device and a network device. For the SL communication, the network device may configure one or more SL carrier bandwidth parts (carrier bandwidth part, BWP) for the terminal device. How to perform sidelink communication by using the SL BWP is a current research hotspot.

INTEL CORPORATION: "Sidelink Physical Layer Structure and Procedures for NR V2X Communication", 3GPP DRAFT, XP051478717 describes a study of technical solutions for sidelink design. HUAWEI ET AL: "Remaining issues on bandwidth part and wideband operation", 3GPP DRAFT, XP051384521 describes issues on bandwidth part and scenarios of multiple active BWP. US2018183551A1 describes a method for signaling radio access network (RAN) profile indexes.

### SUMMARY

This application provides a communication method and an apparatus, to implement broadcast sidelink communication in a system that supports a plurality of frame structure numerologies.

According to a first aspect, a communication method according to appended claim 1 is provided.

It can be learned from the foregoing that in this embodiment of this application, broadcast sidelink communication can be implemented in a system that supports a plurality of frame structure numerologies. The first frame structure numerology is used for communication in the first time unit. This can ensure that a terminal device can perform broadcast sidelink communication in the first time unit, and send and/or receive a broadcast sidelink signal. Further, if bandwidth of a dedicated BWP of the terminal device includes bandwidth of the common BWP, the terminal device may perform broadcast sidelink communication in the dedicated BWP, to avoid BWP reconfiguration or switching. Implementation is simple.

In a possible design, the method further includes: performing sidelink communication in a second dedicated BWP in a second time unit by using a second frame structure numerology, where the second frame structure numerology is a frame structure numerology of the second dedicated BWP.

It can be learned from the foregoing that in this embodiment of this application, the terminal device can perform sidelink communication in different time units by using different BWPs. For example, sidelink communication is performed in the first time unit by using the first BWP, and sidelink communication is performed in the second time unit by using the second BWP. Broadcast, unicast, or multicast sidelink communication may be performed in the first time unit, and unicast and/or multicast sidelink communication may be performed in the second time unit. Further, broadcast sidelink communication may be implemented in a system that supports a plurality of frame structure numerologies.

In a possible design, the sidelink communication in the first time unit includes broadcast.

In a possible design, the sidelink communication in the second time unit includes unicast and/or multicast.

In a possible design, the sidelink communication in the first time unit further includes unicast and/or multicast.

In the first aspect, that the first indication is used to indicate the first time unit includes: The first indication is used to indicate a first time unit corresponding to a reference frame structure numerology. The method further includes: determining, based on the reference frame structure numerology, the first frame structure numerology, and the first time unit corresponding to the reference frame structure numerology, the first time unit corresponding to the first frame structure numerology, where the first frame structure numerology is a frame structure numerology of the first BWP.; The method optionally further includes:
determining, based on the reference frame structure numerology, the second frame structure numerology, and the first time unit corresponding to the reference frame structure numerology, the first time unit corresponding to the second frame structure numerology, where the second frame structure numerology is the frame structure numerology of the second dedicated BWP.

It can be learned from the foregoing that, in this design, the network device indicates only the first time unit corresponding to one frame structure numerology (namely, the reference frame structure numerology), and air interface overheads can be reduced compared with a case in which first time units corresponding to a plurality of frame structure numerologies are indicated. In addition, the terminal device may determine, based on the first time unit corresponding to the reference frame structure numerology, the first time unit corresponding to the first frame structure numerology and/or the first time unit corresponding to the second frame structure numerology, thereby implementing broadcast sidelink communication in a first time unit in a system that supports a plurality of frame structure numerologies.

According to a second aspect, an apparatus according to appended claim 7 is provided.

According to a third aspect, an embodiment of this application provides a computer-readable storage medium according to appended claim 8.

### BRIEF DESCRIPTION OF DRAWINGS

FIG. 1 is a schematic diagram of a network architecture according to an embodiment of this application;
FIG. 2 is a schematic diagram of a BWP according to an embodiment of this application;
FIG. 3 is a flowchart of a communication method according to an embodiment of this application;
FIG. 4 is a schematic diagram of multicast, broadcast, and unicast according to an embodiment of this application;
FIG. 5a, FIG. 5b, or FIG. 5c is a schematic diagram of a BWP configuration according to an embodiment of this application;
FIG. 6 is another schematic diagram of a BWP configuration according to an embodiment of this application;
FIG. 7 is a flowchart of a communication method according to an embodiment of this application;
FIG. 8a, FIG. 8b, FIG. 8c, FIG. 9a, FIG. 9b, and FIG. 9c are each a schematic diagram of a slot according to an embodiment of this application;
FIG. 10 is a flowchart of a communication method according to an embodiment of this application;
FIG. 11 is a schematic diagram of a correspondence between a BWP and broadcast, multicast, and unicast according to an embodiment of this application;
FIG. 12 is a flowchart of a communication method according to an embodiment of this application;
FIG. 13 is a flowchart of a base station scheduling mode;
FIG. 14 is a flowchart of a UE autonomous selection mode;
FIG. 15 is a schematic structural diagram of a communications apparatus according to an embodiment of this application; and
FIG. 16 is a schematic structural diagram of a communications apparatus according to an embodiment of this application.

### DESCRIPTION OF EMBODIMENTS

The following describes the technical solutions in embodiments of this application with reference to the accompanying drawings in the embodiments of this application.

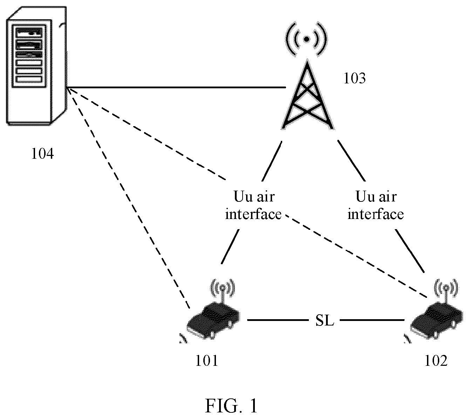

FIG. 1 is a schematic diagram of a possible network architecture to which an embodiment of this application is applicable, including a first terminal device 101 and a second terminal device 102.

The first terminal device 101 and the second terminal device 102 may communicate with each other on a sidelink (sidelink, SL), and a communication manner may include unicast, multicast, broadcast, and/or the like. Optionally, the network architecture shown in FIG. 1 may further include an access network device 103. The access network device 103 may communicate with the first terminal device 101 and/or the second terminal device 102 through a Uu air interface. Optionally, the network architecture shown in FIG. 1 may further include a network management system 104. The first terminal device 101 or the second terminal device 102 may communicate with the network management system 104 in a wired or wireless manner. In a specific implementation, the first terminal device 101 or the second terminal device 102 may communicate with the network management system 104 through the access network device 103. For example, the network management system 104 may be a network management system of an operator.

The Uu air interface may be understood as an interface between universal user equipment (user equipment, UE) and a network (universal UE to network interface). Uu air interface transmission may include uplink transmission and downlink transmission. The uplink transmission may mean that the terminal device transmits a signal to the access network device. The downlink transmission may mean that the access network device transmits a signal to the terminal device. The signal in the uplink transmission may be referred to as uplink information. The signal in the downlink transmission may be referred to as downlink information.

In an existing communications system such as a long term evolution (long term evolution, LTE) system, for SL communication, at a physical layer, only broadcast is supported and only a fixed frame structure numerology (numerology) is supported. For example, the fixed frame structure numerology may be a subcarrier spacing of 15 kHz, a cyclic prefix (cyclic prefix, CP) that is a normal (normal) CP or an extended (extended) CP, or the like. In a new radio (new radio, NR) system, for SL communication, a plurality of frame structure numerologies are supported, and at a physical layer, broadcast, unicast, and multicast are supported. How to implement SL broadcast when a plurality of frame structure numerologies are used is a problem to be resolved in the embodiments of this application.

The following explains and describes some communication nouns or terms used in this application, and the communication nouns or terms are also used as a part of inventive content of the embodiments of this application.

### I. Terminal device

The terminal device may be referred to as a terminal for short, and is a device having a wireless transceiver function. The terminal device may be deployed on land, including an indoor device, an outdoor device, a handheld device, or a vehicle-mounted device, may be deployed on a water surface (such as a ship), or may be deployed in the air (for example, on an aircraft, a balloon, or a satellite). The terminal device may be a mobile phone (mobile phone), a tablet (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), or a wireless terminal device in a smart home (smart home), and may further include user equipment (user equipment, UE) and the like. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5th generation (5th generation, 5G) network, a terminal device in a future evolved public land mobile network (public land mobile network, PLMN), or the like. Sometimes, the terminal device may also be referred to as a terminal, user equipment (user equipment, UE), an access terminal device, a vehicle-mounted terminal device, an industrial control terminal device, a UE unit, a UE station, a mobile station, a remote station, a remote terminal device, a mobile device, a UE terminal device, a terminal device, a wireless communications device, a UE agent, a UE apparatus, or the like. The terminal device may be fixed or movable. This is not limited in the embodiments of this application.

In the embodiments of this application, an apparatus used to implement a terminal function may be a terminal, or may be an apparatus, for example, a chip system, that can support a terminal to implement the function. The apparatus may be installed in the terminal. In the embodiments of this application, the chip system may include a chip, or may include a chip and another discrete component. In the technical solutions provided in the embodiments of this application, an example in which the apparatus used to implement the terminal function is a terminal and the terminal is UE is used to describe the technical solutions provided in the embodiments of this application.

### II. Network device

The network device may be an access network device. The access network device may also be referred to as a radio access network (radio access network, RAN) device, and is a device that provides a wireless communication function for a terminal device. For example, the access network device includes but is not limited to: a next-generation base station (generation nodeB, gNB) in 5G, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB or a home node B, HNB), a baseband unit (baseband unit, BBU), a transmission reception point (transmission reception point, TRP), a transmitting point (transmitting point, TP), a mobile switching center, and the like. Alternatively, the access network device may be a radio controller, a centralized unit (centralized unit, CU), and/or a distributed unit (distributed unit, DU) in a cloud radio access network (cloud radio access network, CRAN) scenario, or the network device may be a relay station, an access point, a vehicle-mounted device, a terminal device, a wearable device, a network device in a future 5G network, a network device in a future evolved PLMN network, or the like. The terminal device may communicate with a plurality of access network devices using different technologies. For example, the terminal device may communicate with an access network device supporting long term evolution (long term evolution, LTE), may communicate with an access network device supporting 5G, or may implement dual connectivity with an access network device supporting LTE and an access network device supporting 5G. This is not limited in the embodiments of this application.

In the embodiments of this application, an apparatus used to implement a network device function may be a network device, or may be an apparatus that can support a network device to implement the function, for example, a chip system. The apparatus may be installed in the network device. In the technical solutions provided in the embodiments of this application, an example in which the apparatus used to implement the network device function is a network device and the network device is a base station is used to describe the technical solutions provided in the embodiments of this application.

### III. Sidelink (sidelink, SL)

The sidelink is used for communication between terminal devices, and may include a physical sidelink shared channel (physical sidelink shared channel, PSSCH) and a physical sidelink control channel (physical sidelink control channel, PSCCH). The PSSCH may be used to carry sidelink data (SL data), the PSCCH may be used to carry sidelink control information (sidelink control information, SCI), and the SCI may also be referred to as a sidelink scheduling assignment (sidelink scheduling assignment, SL SA). The SL SA is information related to data scheduling. For example, the SL SA includes information such as resource allocation and/or a modulation and coding scheme (modulation and coding scheme, MCS) of the PSSCH. Optionally, the sidelink communication may further include: a physical sidelink uplink control channel (physical sidelink uplink control channel, PSUCCH). The physical sidelink uplink control channel may also be referred to as a sidelink uplink control channel for short. The physical sidelink uplink control channel may also be referred to as a physical sidelink feedback channel (physical sidelink feedback channel, PSFCH). The physical sidelink feedback channel may also be referred to as a sidelink feedback channel for short. The sidelink uplink control channel or the sidelink feedback channel may be used to transmit sidelink feedback control information (sidelink feedback control information, SFCI). The sidelink feedback control information may also be referred to as sidelink feedback information for short, and may also be referred to as sidelink uplink control information (sidelink uplink control information, SL UCI). The sidelink feedback control information may include at least one of channel state information (channel state information, CSI), hybrid automatic repeat request (hybrid automatic repeat request, HARQ) information, and the like. The HARQ information may include acknowledgement information (acknowledgement, ACK), negative acknowledgement (negative acknowledgement, NACK), or the like. In the embodiments of this application, "at least one" may be one, two, three, or more. This is not limited in the embodiments of this application.

### IV. Time unit

A unit of the time unit may be a unit such as a radio frame (radio frame), a subframe (subframe), a slot (slot), a mini-slot (mini-slot), or a symbol (symbol). For example, in a specific implementation, one time unit may include two slots or the like. One radio frame may include one or more subframes, and one subframe may include one or more slots. There may be different slot lengths for different subcarrier spacings. For example, one slot may be one millisecond (ms) when a subcarrier spacing is 15 kHz; one slot may be 0.5 ms when a subcarrier spacing is 30 kHz. One slot may include one or more symbols. For example, a slot with a normal cyclic prefix (cyclic prefix, CP) may include 14 time domain symbols, and a slot with an extended CP may include 12 time domain symbols. The time domain symbol may be referred to as a symbol for short. The time domain symbol may be an orthogonal frequency division multiplexing (orthogonal frequency division multiplexing, OFDM) symbol, or may be a discrete fourier transform spread orthogonal frequency division multiplexing (discrete fourier transform spread orthogonal frequency division multiplexing, DFT-s-OFDM) symbol. In the embodiments of this application, an example in which the time domain symbol is an OFDM symbol may be used for description. The mini-slot may be a smaller unit than a slot, and one mini-slot may include one or more symbols. For example, one mini-slot may include two symbols, four symbols, seven symbols, or the like. One slot may include one or more mini-slots.

### V. Carrier bandwidth part (carrier bandwidth part, BWP)

The carrier bandwidth part may be referred to as a bandwidth part (bandwidth part, BWP) for short. The BWP is a group of contiguous frequency domain resources in a carrier. For example, the BWP is a group of contiguous resource blocks (resource block, RB) in the carrier, or the BWP is a group of contiguous subcarriers in the carrier, or the BWP is a group of contiguous resource block groups (resource block group, RBG) in the carrier. One RBG includes at least one RB, for example, one, two, four, six, or eight RBs, and one RB may include at least one subcarrier, for example, 12 subcarriers. In a possible implementation, for example, in a method shown in NR release 15 (release 15, Rel-15), in one cell, for a terminal device, a network may configure a maximum of four BWPs for the terminal device. In frequency division duplexing (frequency division duplexing, FDD), four BWPs may be configured on each of an uplink and a downlink. In time division duplexing (time division duplexing, TDD), four BWPs may be configured on each of an uplink and a downlink. For each BWP, a network device may configure, for the terminal device, a frame structure numerology that includes a subcarrier spacing and/or a CP length. At any moment, only one BWP can be activated in one cell, and the terminal device and the network device transmit and receive data in the activated BWP. An existing BWP is defined on a given carrier, that is, a resource of one BWP is located in one carrier resource.

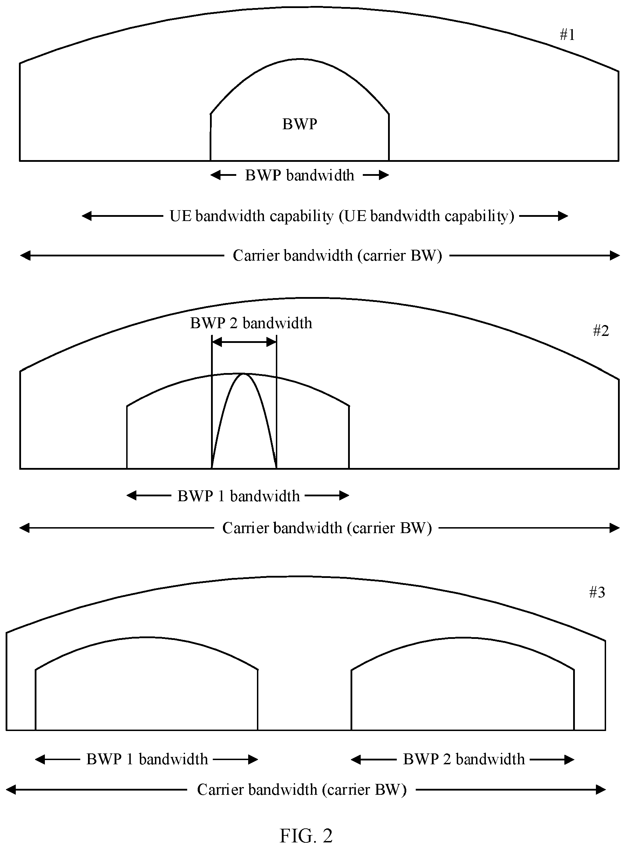

As shown by #1 in FIG. 2, in carrier bandwidth (carrier BW), only one BWP may be configured for one UE, where a bandwidth of the BWP is less than or equal to a UE bandwidth capability (UE bandwidth capability), and the UE bandwidth capability is less than or equal to the carrier bandwidth (carrier BW). As shown by #2 in FIG. 2, in carrier bandwidth, two BWPs, namely, a BWP 1 and a BWP 2, may be configured for one UE, and bandwidth of the BWP 1 and bandwidth of the BWP 2 overlap. As shown by #3 in FIG. 2, in carrier bandwidth, two BWPs, namely, a BWP 1 and a BWP 2, may be configured for one UE, and the BWP 1 and the BWP 2 do not overlap. Frame structure numerologies of the BWP 1 and the BWP 2 may be the same or different. In practice, a BWP configuration (for example, a configuration such as a quantity of BWPs, a BWP position, and/or a frame structure numerology of a BWP) may alternatively be another configuration. This is not limited in the embodiments of this application.

To enable an SL transmission-related design to be compatible with a design of a Uu air interface, for an SL in NR, a BWP design may alternatively be used to configure an SL resource. For a cell, the network device may configure an SL BWP in a preconfiguration manner or through common signaling such as a system message. The configured SL BWP may be a common BWP (common BWP) of the cell. For a cell, the common BWP is a BWP configured for all UEs in the cell. Optionally, the common BWP may be a BWP used for broadcast sidelink communication. Alternatively, the common BWP may be a BWP used for sidelink communication by a user in a non-connected state (for example, a user in an idle state, a user in an inactive state, or a user outside coverage). Alternatively, the common BWP may be a BWP used by a user in a connected state to perform sidelink communication with a user outside coverage. Alternatively, the network device may configure an SL BWP for UE through UE-specific (specific) signaling, and the configured SL BWP may be a dedicated BWP of the UE. The configuration of the carrier bandwidth part may include a frequency start position (for example, a start resource block (resource block, RB)), a bandwidth (bandwidth, BW), a corresponding frame structure numerology (numerology), and the like of the carrier bandwidth part. The bandwidth may be a quantity of RBs or a quantity of RBGs included in the carrier bandwidth part, and the frame structure numerology may include a subcarrier spacing and/or a CP type. For a specific BWP configuration, refer to a BWP configuration procedure in the 3rd generation partnership project (3rd generation partnership project, 3GPP) NR protocols 38.213 and 38.331.

Optionally, the SL resource in the embodiments of this application may be an SL BWP, may be a resource pool, or may be a resource used for sidelink communication in an SL resource pool. Optionally, the SL resource pool may also be referred to as a resource pool for short.

### VI. Frame structure numerology (numerology)

The frame structure numerology may include a subcarrier spacing, a cyclic prefix (cyclic prefix, CP) type, and/or the like. The CP type may also be referred to as a CP length, or referred to as a CP for short. The CP type may be an extended CP or a normal (normal) CP. A slot with an extended CP may include 12 time domain symbols, and a slot with a normal CP may include 14 time domain symbols. In different subcarrier spacings, a slot length corresponding to one slot may vary. For example, one slot may be 1 ms when a subcarrier spacing is 15 kHz; one slot may be 0.5 ms when a subcarrier spacing is 30 kHz. In different subcarrier spacings, a same quantity of time domain symbols may be included in one slot, for example, 12 or 14.

### VII. Base station scheduling mode of a sidelink SL

The base station scheduling mode of the sidelink SL may also be referred to as a base station auxiliary scheduling mode, or referred to as a base station scheduling mode for short. In the base station scheduling mode, the network device may configure an SL resource for transmit-end UE and/or receive-end UE through configuration information. The SL resource may include one or more resource pools. In the embodiments of this application, "a plurality" may be two, three, four, or more. This is not limited in the embodiments of this application. The network device may indicate, to the transmit-end UE through downlink control information (downlink control information, DCI), a resource used for sidelink communication in the SL resource pool. When receiving the DCI, the transmit-end UE may send SL information to the receive-end UE by using the resource that is indicated by the DCI and that is in the resource pool, where the SL information may include SL data and/or SCI. Correspondingly, the receive-end UE may receive the SL information. After receiving the SL data, the receive-end UE may send SFCI to the transmit-end UE, where the SFCI may include an ACK/NACK for the SL data. In the embodiments of this application, the transmit-end UE and the receive-end UE may be specific to the SL data. For the SFCI, the receive-end UE for the SL data may be described as transmit-end UE, and the transmit-end UE for the SL data may be described as receive-end UE. The network device may be a base station, a network management system operated by an operator, or the like. Optionally, an SL resource of the transmit-end UE may be an SL resource configured by the base station for the transmit-end UE, and an SL resource of the receive-end UE may be an SL resource configured by the network management system for the receive-end UE. Alternatively, an SL resource of the receive-end UE may be an SL resource configured by the base station for the receive-end UE, and an SL resource of the transmit-end UE may be an SL resource configured by the network management system for the transmit-end UE, or the like.

In an example, the network device may configure SL resources for UE 1 and UE 2, the network device may send DCI to the UE 1, and the UE 1 may determine an SL sending resource based on an indication of the DCI, and send SCI and/or SL data on the SL sending resource. The UE 2 determines an SL receiving resource based on the configured SL resource, receives the SCI on the SL receiving resource, and receives the SL data on the receiving resource based on the SCI. Optionally, after receiving the SL data, the UE 2 may send the SFCI to the UE 1. For example, if the UE 2 correctly receives the SL data, the SFCI may include a positive acknowledgement ACK; otherwise, the SFCI may include a negative acknowledgement NACK, and so on.

In an example, the network device may configure SL resources for the UE 1, the UE 2, and UE 3, and the network device may allocate SL sending resources to the UE 3 and the UE 1 through DCI. The UE 3 may send an SL signal to the UE 1 on the SL sending resource. For example, the SL signal may include the SCI and/or the SL data. After the UE 1 receives the SL signal, the UE 1 may send the SFCI to the UE 3. Optionally, in addition, the UE 1 may send an SL signal to the UE 2 on the SL sending resource. For example, the SL signal may include the SCI and/or the SL data. After the UE 2 receives the SL signal, the UE 2 may send the SFCI to the UE 1.

### VIII. UE autonomous selection mode of a sidelink SL

The UE autonomous selection mode may also be referred to as a UE active selection mode. In the UE autonomous selection mode, the network device may configure SL resources for sending UE and/or receiving UE through configuration information, where the SL resource includes one or more resource pools. The transmit-end UE performs perception on the configured SL resource. If the transmit-end UE perceives an available resource in the SL resource, the transmit-end UE sends SL information on the available resource. Correspondingly, the receive-end UE receives the SL information on the SL resource. Optionally, an SL resource of the transmit-end UE may be an SL resource configured by the base station for the transmit-end UE, and an SL resource of the receive-end UE may be an SL resource configured by the network management system for the receive-end UE. Alternatively, an SL resource of the receive-end UE may be an SL resource configured by the base station for the receive-end UE, and an SL resource of the transmit-end UE may be an SL resource configured by the network management system for the transmit-end UE.

In an example, the network device may configure SL resources for the UE 1 and the UE 2, and the UE 1 perceives an SL sending resource in the configured SL resource, and sends SCI and/or SL data on the SL sending resource. Correspondingly, the UE 2 receives the SCI and/or the SL data based on the configured SL resource. Optionally, after receiving the SL data, the UE 2 may perceive an SL sending resource in the configured SL resource, and send SFCI and the like to the UE 1 on the SL sending resource.

Similar to the foregoing base station scheduling mode of the sidelink SL, when the UE 1 is used as a transmit end to send SL data information to the UE 2 on the SL sending resource, the UE 1 may also be used as a receive end to receive SL data information sent by UE 3. Optionally, in addition, the UE 1 may send SFCI to the UE 3 on the SL sending resource. For detailed descriptions, refer to the foregoing records of the base station scheduling mode of the sidelink SL. Details are not described herein again.

It should be noted that a noun "transmission" in this application may include data sending and/or receiving, and/or control information sending and/or receiving. Words such as "first" and "second" are merely used for distinction and description, and shall not be understood as an indication or implication of relative importance or an indication or implication of an order.

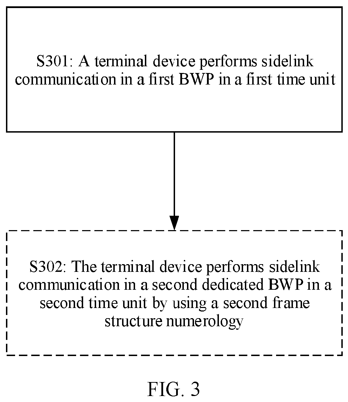

As shown in FIG. 3, a procedure of a communication method is provided. The procedure may be executed by the transmit-side terminal device 101 or the receive-side terminal device 102 in FIG. 1. The procedure includes the following steps.

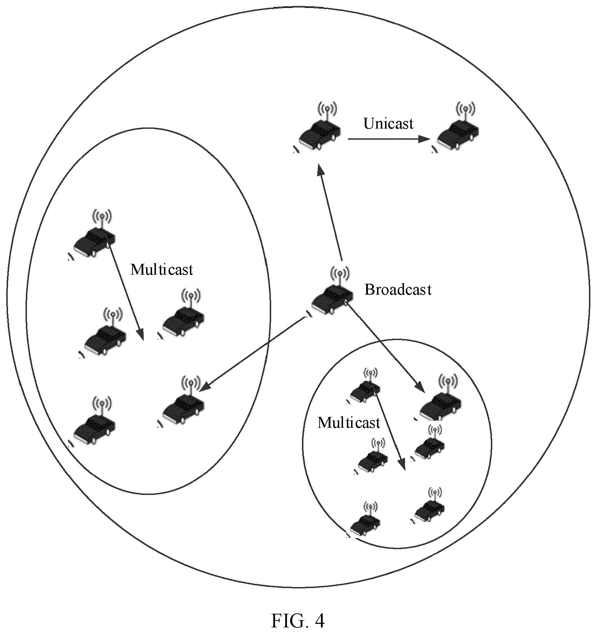

S301: The terminal device performs sidelink communication in a first BWP in a first time unit. The sidelink communication in the first time unit may include broadcast (broadcast). Optionally, multicast (groupcast) and/or unicast (unicast) may be further included. To be specific, the sidelink communication in the first time unit may include "broadcast", "broadcast and unicast", "broadcast and multicast", or "broadcast, unicast, and multicast". As shown in FIG. 4, the broadcast may refer to communication between one terminal device and a plurality of terminal devices. For example, the broadcast may refer to communication between one terminal device and all terminal devices in a cell. Therefore, for the broadcast, all the terminal devices need to perform receiving. A purpose of broadcast is to enable all the terminal devices to receive a broadcast message. However, in practice, one or more terminal devices may receive the broadcast message. Multicast may refer to communication between one terminal device and one group of terminal devices. A purpose of multicast is to enable all terminal devices in one group of terminal devices to receive a multicast message. However, in practice, one or more terminal devices in the group of terminal devices may receive the multicast message. Unicast may refer to the communication between one terminal device and another terminal device. A purpose of unicast is to enable one terminal device to receive a unicast message. However, during actual application, the terminal device may receive or not receive the unicast message.

For example, a first terminal device may send a sidelink signal in a first BWP in a first time unit. Correspondingly, a second terminal device receives the sidelink signal in the first BWP in the first time unit, where the sidelink signal may include data (data), sidelink control information (sidelink control information, SCI), and/or the like. Optionally, the sidelink signal may further include sidelink feedback information.

Alternatively, a first frame structure numerology is used for the sidelink communication in the first time unit, the first frame structure numerology is the same as a frame structure numerology of a common BWP, and the first BWP is the common BWP or a first dedicated BWP. A frame structure numerology of the first dedicated BWP is the same as the frame structure numerology of the common BWP. Optionally, bandwidth of the first dedicated BWP includes bandwidth of the common BWP.

Alternatively, the first BWP is a common BWP or a first dedicated BWP, and the first time unit is a time unit for broadcast sidelink communication. A frame structure numerology of the first dedicated BWP is the same as a frame structure numerology of the common BWP. Optionally, bandwidth of the first dedicated BWP includes bandwidth of the common BWP.

Alternatively, the first BWP is a common BWP or a first dedicated BWP, a frame structure numerology of the first dedicated BWP is the same as a frame structure numerology of the common BWP, a first frame structure numerology is used for the sidelink communication in the first time unit, and the first frame structure numerology is the same as a frame structure numerology used for broadcast sidelink communication. Optionally, bandwidth of the first dedicated BWP includes bandwidth of the common BWP.

Alternatively, a first frame structure numerology is used for the sidelink communication in the first BWP in the first time unit, the first BWP is a common BWP or a first dedicated BWP, a frame structure numerology of the first dedicated BWP is the same as a frame structure numerology of the common BWP, and the first frame structure numerology is the same as a frame structure numerology used for broadcast sidelink communication. Optionally, bandwidth of the dedicated BWP includes bandwidth of the common BWP.

Alternatively, a first frame structure numerology is used for the sidelink communication in the first BWP in the first time unit, the first BWP is a common BWP or a first dedicated BWP, a frame structure numerology of the first dedicated BWP is the same as a frame structure numerology of the common BWP, and the first frame structure numerology is the same as the frame structure numerology of the common BWP. Optionally, bandwidth of the first dedicated BWP includes bandwidth of the common BWP.

In this embodiment of this application, that a frame structure numerology A is the same as a frame structure numerology B may also be described as follows: The frame structure numerology A is the frame structure numerology B. For example, that the first frame structure numerology is the same as the frame structure numerology of the common BWP may also be described as follows: The first frame structure numerology is the frame structure numerology of the common BWP.

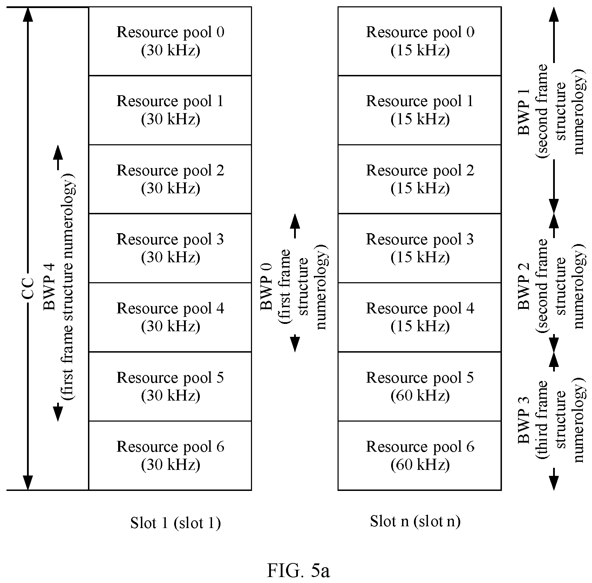

In the foregoing method, optionally, the bandwidth of the first dedicated BWP may include the bandwidth of the common BWP. For example, as shown in FIG. 5a, in a BWP configuration of the terminal device in a slot 1, the first dedicated BWP is a BWP 4, including a resource pool 2 to a resource pool 5, and the common BWP is a BWP 0, including a resource pool 3 and a resource pool 4. A frame structure numerology of the BWP 4 is the same as that of the BWP 0, and both are the first frame structure numerology. Bandwidth of the first dedicated BWP (BWP 4) includes bandwidth of the common BWP (BWP 0).

It may be understood that in the example shown in FIG. 5a, an example in which a subcarrier spacing of the first frame structure numerology is 30 kHz is used for description, but this does not constitute a limitation on this application. For example, the subcarrier spacing of the first frame structure numerology may be 15 kHz, 30 kHz, 60 kHz, or the like.

When the terminal device is in the slot 1, the terminal device may operate in the first dedicated BWP. Specifically, the terminal device may perform at least one of broadcasting, multicasting, or unicasting in an overlapping part between the common BWP and the first dedicated BWP (namely, the resource pool 3 or the resource pool 4), and/or the terminal device may perform multicast and/or unicast in a non-overlapping part between the common BWP and the first dedicated BWP (namely, the resource pool 2 and the resource pool 5).

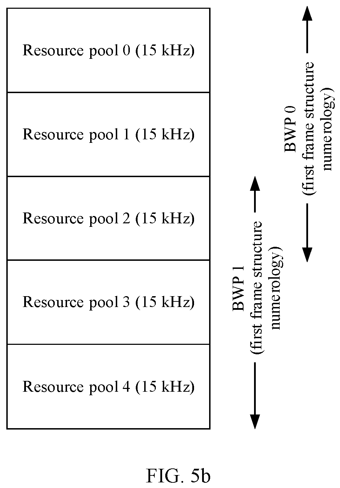

In the foregoing method, optionally, the bandwidth of the first dedicated BWP and the bandwidth of the common BWP may partially overlap. As shown in FIG. 5b, in a first time unit, a BWP 0 is the common BWP, including a resource pool 0 to a resource pool 2, and a BWP 1 is the first dedicated BWP, including a resource pool 2 to a resource pool 4. In addition, a frame structure numerology of the BWP 0 is the same as that of the BWP 1, and both are the first frame structure numerology. Bandwidth of the BWP 0 partially overlaps that of the BWP 1, namely, the resource pool 2. In this embodiment of this application, the terminal device may operate in the first dedicated BWP. Specifically, the terminal device may perform at least one of broadcasting, multicasting, or unicasting in an overlapping broadband part between the common BWP and the first dedicated BWP (namely, the resource pool 2), and/or the terminal device may perform multicasting and/or unicasting in a non-overlapping part between the common BWP and the first dedicated BWP (namely, the resource pool 3 and the resource pool 4).

It may be understood that, in the example shown in FIG. 5b, an example in which a subcarrier spacing of the first frame structure numerology is 15 kHz is used for description, but this does not constitute a limitation on this embodiment of this application. For example, the subcarrier spacing of the first frame structure numerology may be 15 kHz, 30 kHz, 60 kHz, or the like.

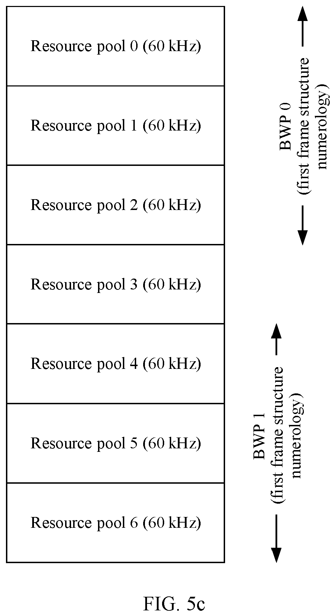

In the foregoing method, optionally, the bandwidth of the first dedicated BWP and the bandwidth of the common BWP may not overlap at all. As shown in FIG. 5c, in a first time unit, a BWP 0 is the common BWP, including a resource pool 0 to a resource pool 2, and a BWP 1 is the dedicated BWP, including a resource pool 4 to a resource pool 6. A frame structure numerology of the BWP 0 is the same as that of the BWP 1, and both are the first frame structure numerology. The bandwidth of the common BWP (BWP 0) does not overlap that of the first dedicated BWP (BWP 1) at all. The terminal device may perform multicasting and/or unicasting in the first dedicated BWP, and/or perform at least one of multicasting, unicasting, or broadcasting in the common BWP.

It may be understood that, in the example shown in FIG. 5c, an example in which a subcarrier spacing of the first frame structure numerology is 60 kHz is used for description, but this does not constitute a limitation on this embodiment of this application. For example, the subcarrier spacing of the first frame structure numerology may be 15 kHz, 30 kHz, 60 kHz, or the like.

It may be understood that, in this embodiment of this application, one resource pool may include one or more contiguous subcarriers, RBs, or RBGs. One BWP may include one or more resource pools. Bandwidths of different resource pools may be the same or different. In this embodiment of this application, the resource pools may be numbered from top to bottom (for example, in descending order of frequency domain positions), or may be numbered from bottom to top (for example, in ascending order of frequency domain positions). For example, in the example in FIG. 5a, the resource pools are numbered in a top-to-bottom numbering sequence. If the resource pools shown in FIG. 5a are numbered in a bottom-to-top numbering sequence, a number of the resource pool 0 shown in FIG. 5a is replaced with a number 6, a number of the resource pool 1 is replaced with a number 5, and so on; and a number of the resource pool 6 is replaced with a number 0. In addition, a numbering manner of the resource pools in this embodiment of this application may be unified numbering in a carrier, or may be unified numbering in an SL BWP. For example, in the example in FIG. 5a, if unified numbering is performed in a carrier, numbers of the resource pools are 0 to 6. Alternatively, unified numbering may be performed based on a corresponding SL BWP. For example, the resource pools in the BWP 0 are numbered 0 and 1, and the resource pools in the BWP 4 are numbered 0 to 3. Resource pools in a BWP may also be numbered from top to bottom (for example, in descending order of frequency domain positions) or from bottom to top (for example, in ascending order of frequency domain positions). It should be noted that this application imposes no limitation on a numbering manner and a sequence of the resource pools. Optionally, the resource pools may be numbered from 0 or 1. This is not specifically limited in this application. Optionally, the BWPs may be numbered from 0 or 1. This is not specifically limited in this application.

In an example, the common BWP may be a preconfigured sidelink BWP. For example, a network management system operated by an operator may configure a sidelink BWP for a terminal device by using preconfiguration signaling or a preconfiguration parameter, and the sidelink BWP may be referred to as a preconfigured sidelink BWP. Optionally, the preconfigured sidelink BWP may also be referred to as a preconfigured BWP for short. Optionally, a sending resource pool and/or a receiving resource pool configured in the preconfigured BWP may be referred to as a preconfigured resource pool. The preconfigured resource pool may include a preconfigured sending resource pool and/or a preconfigured receiving resource pool.

For example, the network management system may write a preconfiguration parameter into a subscriber identity module (subscriber identity module, SIM) card or a universal subscriber identity module (universal subscriber identity module, USIM) card of the terminal device, and the terminal device may obtain configuration information of the preconfigured sidelink BWP by reading the preconfiguration parameter in the SIM card or the USIM card, and further determine the preconfigured sidelink BWP. Alternatively, the network management system may send a preconfiguration parameter to mobile equipment (mobile equipment, ME) of the terminal device, and the terminal device may determine the preconfigured sidelink BWP by using the preconfiguration parameter. Optionally, the SIM card is also referred to as a smart card, or the like. The USIM may also be referred to as an upgraded SIM or the like. Optionally, in this embodiment of this application, the preconfiguration parameter may also be referred to as preconfiguration signaling, preconfiguration information, or another name.

In an example, the common BWP may be a system common sidelink BWP. For example, an access network device may configure a sidelink BWP for the terminal device through system information or cell-level common information, and the sidelink BWP may be referred to as a system common sidelink BWP. Optionally, the system common sidelink BWP may also be referred to as a system common BWP for short. A sending resource pool and/or a receiving resource pool configured in the system common BWP may be referred to as a system common resource pool or a common resource pool. The common resource pool may include a common sending resource pool and/or a common receiving resource pool.

In an example, the dedicated BWP may be referred to as a user-dedicated sidelink BWP, or referred to as a user-specific sidelink BWP, or referred to as a user-dedicated BWP for short, or referred to as a user-specific BWP for short, or referred to as a specific BWP for short. For example, the BWP may be configured by a network device for the terminal device through UE specific (specific) signaling, or the BWP may be a sidelink BWP configured by an access network device for the terminal device through dedicated radio resource control (radio resource control, RRC) signaling, or the like. Optionally, a sending resource pool and/or a receiving resource pool configured in the dedicated BWP may be referred to as a dedicated resource pool. The dedicated resource pool may include a dedicated sending resource pool and/or a dedicated receiving resource pool.

In an example, a status of the terminal device may include at least one of in coverage, outside coverage, a connected (connected) state, an idle (idle) state, and an inactive (inactive) state.

In an example, a terminal device in coverage may be a terminal device that is in coverage of an access network device and whose signal received power is greater than or equal to a first threshold. For example, the first threshold may be -3 dB. Alternatively, a terminal in coverage may be a terminal that can receive a system message of an access network device, or a terminal in coverage may be a terminal that can receive an RRC message of an access network device. For example, the terminal in coverage may be a terminal in the idle state, or may be a terminal in the connected state, or may be a terminal in the inactive state.

Specifically, for example, the terminal in the idle state or the inactive state may be a terminal that receives the system message of the access network device. The terminal in the connected state may be a terminal that has an RRC link with the access network device, and the terminal may receive the RRC message of the access network device.

In an example, a terminal device outside coverage may be a terminal that is not within coverage of an access network device. For example, the terminal device may be a terminal whose signal received power is less than or equal to a first threshold. For example, the first threshold may be -3 dB. Alternatively, a terminal device outside coverage may be a terminal device in the idle state, or a terminal device in coverage may be a terminal device in the inactive state.

Optionally, the terminal device outside coverage cannot receive a signal sent by the access network device or has relatively poor receiving performance. Therefore, a sidelink resource of the terminal device outside coverage may be a sidelink resource configured by using a preconfiguration parameter. For example, a BWP of the terminal device outside coverage may be a preconfigured BWP. That is, an operating BWP of the terminal outside coverage is the preconfigured BWP.

Optionally, a terminal that is in coverage and that is in the idle state or the inactive state cannot receive RRC dedicated signaling sent by the access network device. Therefore, a sidelink resource of the terminal that is in coverage and that is in the idle state or the inactive state may be a sidelink resource configured by using a preconfiguration parameter and/or a sidelink resource configured through system information. For example, a BWP of the terminal that is in coverage and that is in the idle state or the inactive state may be a preconfigured BWP and/or a system common BWP.

Optionally, a terminal that is in coverage and that is in the connected state may not only receive system information sent by the access network device, but also receive RRC dedicated signaling sent by the access network device. Therefore, a sidelink resource of the terminal that is in coverage and that is in the connected state may be a sidelink resource configured by using a preconfiguration parameter, a sidelink resource configured through system information, and/or a sidelink resource configured through RRC dedicated signaling. For example, a BWP of the terminal that is in coverage and that is in the connected state may be a preconfigured BWP, a system common BWP, and/or a dedicated BWP.

In an example, the network device may independently configure a start position and a bandwidth of a BWP for the terminal device. For example, the network device may configure N BWPs for the terminal device, and numbers of the BWPs may be 0 to N-1, where N is less than or equal to a maximum quantity of sidelink BWPs that can be configured by the network device for the terminal device. For example, when a value of N is 2, the network device may independently configure a BWP 0 and a BWP 1 (for example, the BWP 0 and a BWP 1 in the slot 1 in FIG. 5a) for a terminal device 1, may independently configure a BWP 0 and a BWP 1 (for example, the BWP 0 and the BWP 1 in FIG. 5b) for a terminal device 2, and may independently configure a BWP 0 and a BWP 1 (for example, the BWP 0 and the BWP 1 in FIG. 5c) for a terminal device 3. When a value of N is 4, the network device may independently configure a BWP 0, a BWP 1, a BWP 2, and a BWP 3 (for example, the BWP 0, a BWP 1, a BWP 2, and a BWP 3 shown in the slot 1 and a slot n in FIG. 5a) for a terminal device 4. When a value of N is 5, the network device may independently configure a BWP 0, a BWP 1, a BWP 2, a BWP 3, a BWP 4, and the like for the terminal device 1. In different slots, the network device and the terminal device may use a same BWP for data transmission, or may use different BWPs for data transmission. This is not limited in this embodiment of this application.

Optionally, a frame structure numerology corresponding to each BWP may be independently configured. Frame structure numerologies of any two BWPs may be the same or different.

In this embodiment of this application, for one carrier component (carrier component, CC), the network device may configure a plurality of BWPs on the CC for the terminal device. Frame structure numerologies of different BWPs may be the same or different. The plurality of BWPs may include a common BWP (common BWP) and/or a dedicated BWP (dedicated BWP). Optionally, the network device may be a base station, a network management system operated by an operator, or the like. For example, as shown in FIG. 5a, one CC may include seven resource pools (resource pool) numbered from 0 to 6. For the CC, the network device may configure five BWPs for the terminal device, and numbers of the five BWPs may be 0 to 4. The BWP 0 may be a common BWP, and the BWP 1, the BWP 2, the BWP 3, and the BWP 4 may be dedicated BWPs. In addition, frame structure numerologies of the BWP 0 and the BWP 4 are the first frame structure numerology. The first frame structure numerology includes a subcarrier spacing of 30 kHz and a CP that is a normal CP or an extended CP. Frame structure numerologies of the BWP 1 and the BWP 2 are a second frame structure numerology. The second frame structure numerology includes a subcarrier spacing of 15 kHz and a CP that is an extended CP or a normal CP. A frame structure numerology of the BWP 3 is a third frame structure numerology. The third frame structure numerology includes a subcarrier spacing of 60 kHz and a CP that is an extended CP or a normal CP. Optionally, the BWP 0 may be configured for the terminal device through a network management system operated by an operator, and the BWP 1 to the BWP 4 may be configured for the terminal device through an access network device.

Optionally, the resource pool in this embodiment of this application may refer to a time-frequency resource for sidelink communication. In time domain, the resource pool may correspond to one or more time units, for example, a slot, a symbol, and a subframe. In frequency domain, the resource pool may correspond to a segment of continuous or discontinuous frequency domain resources. In frequency domain, the resource pool may be configured in the SL BWP.

Optionally, the resource pool may be configured for a cell, or may be configured for the terminal device. Specifically, for example, a resource pool configured by using a preconfiguration parameter may be configured for a cell, and the terminal device obtains the same preconfiguration parameter. For example, a resource pool configured through system information may be configured for a cell, and the terminal device receives the same system information. For example, a resource pool configured through RRC dedicated information may be configured for the terminal device. Specifically, for example, the resource pool may be configured for the SL BWP of the terminal device.

Optionally, division of resource pools in one carrier may be aligned for all UEs. For example, as shown in FIG. 5a, the network device may divide seven resource pools for the CC, and for one terminal device, a BWP of the terminal device may be configured to include one or more resource pools. Resource pools corresponding to different resource pool numbers may be configured for different terminal devices.

Optionally, the resource pool may include a sending resource pool and a receiving resource pool. The sending resource pool refers to a resource used by the terminal device to send a sidelink signal, and the receiving resource pool refers to a resource used by the terminal device to receive a sidelink signal. The terminal device may send a sidelink signal on the sending resource pool, and/or receive a sidelink signal on the receiving resource pool.

Optionally, a definition of the resource pool in this application may be the same as a description in an LTE protocol, or may be a definition of a resource pool in NR, or may be a definition in a future network. This is not limited in this application.

As shown in FIG. 5a, the first time unit is set to include the slot 1 (slot 1). In the slot 1, the terminal device may perform sidelink communication in the common BWP 0 or the dedicated BWP 4. It can be learned from FIG. 5a that the dedicated BWP 4 includes the resource pool 2, the resource pool 3, the resource pool 4, and the resource pool 5, and the common BWP 0 includes the resource pool 3 and the resource pool 4. In other words, bandwidth of the dedicated BWP 4 may include bandwidth of the common BWP 0.

It may be understood that, if the terminal device already operates in the common BWP 0 or the dedicated BWP 4 in a slot (for example, the slot 0) before the slot 1, the terminal device may not need to perform an operation of activating the common BWP 0 or the dedicated BWP 4 in the slot 1, but directly perform sidelink communication in the common BWP 0 or the dedicated BWP 4. If the terminal device operates in a BWP other than the common BWP 0 or the dedicated BWP 4 in a slot (for example, the slot 0) before the slot 1, the terminal device needs to perform an operation of activating the common BWP 0 or the dedicated BWP 4 in the first time unit, and perform sidelink communication in the activated BWP 0 or BWP 4.

Optionally, in this embodiment of this application, for one CC, a common BWP set may be configured for the terminal device. The common BWP set may include one or more common BWPs. The one or more common BWPs may be referred to as candidate common BWPs. The candidate common BWPs may include a configured common BWP and/or a possible common BWP predefined in a protocol. When the first BWP is the common BWP, the terminal device may determine the first BWP based on the one or more candidate common BWPs in the common BWP set.

For example, the terminal device may determine a common BWP in the common BWP set based on a radio frequency capability of the terminal device (also referred to as a radio frequency capability of UE), and perform sidelink communication in the common BWP in the first time unit. A bandwidth of the common BWP determined by the UE may be less than or equal to the radio frequency capability of the UE. For example, the common BWP determined by the UE is any BWP whose bandwidth is less than or equal to the radio frequency capability of the UE in the common BWP set, or the common BWP determined by the UE is a BWP that has a largest bandwidth and whose bandwidth is less than or equal to the radio frequency capability of the UE in the common BWP set. The radio frequency capability of the terminal device may also be referred to as a channel bandwidth capability, a radio frequency bandwidth capability, a bandwidth capability, or the like. The radio frequency capability may include a transmission radio frequency bandwidth capability, a receiving radio frequency bandwidth capability, and/or the like. The bandwidth capability may include a transmission bandwidth capability, a receiving bandwidth capability, and/or the like. For example, the terminal device may support radio capabilities with different bandwidths such as 10 M, 20 M, 50 M, 100 M, 200 M, and 400 M.

It may be understood that, if the terminal device already operates in the common BWP before the first time unit, the terminal device does not need to activate the common BWP again in the first time unit, but directly performs sidelink communication in the common BWP. If the terminal device operates in a BWP other than the common BWP in the first time unit, the terminal device needs to activate the common BWP in the first time unit, and performs sidelink communication in the activated common BWP.

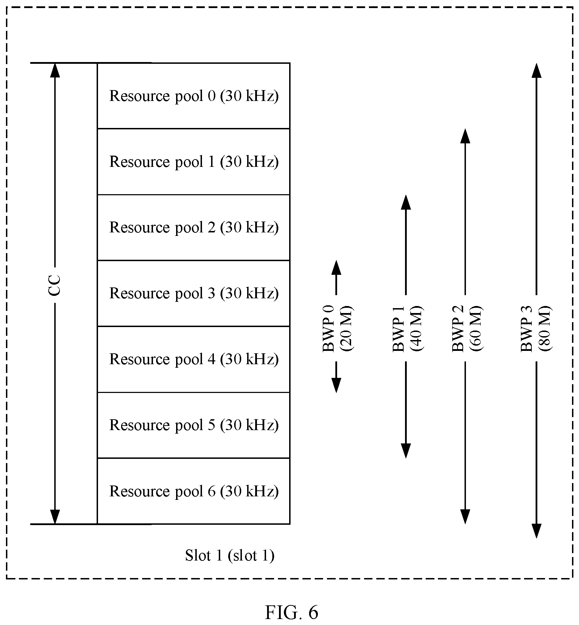

For example, for a plurality of common BWPs configured by the network device for the terminal device or a plurality of predefined common BWPs, the terminal device may determine, based on the radio frequency capability, a common BWP for sidelink communication in the first time unit. For example, as shown in FIG. 6, the first time unit may include a slot 1, and the network device may configure four common BWPs or predefine four common BWPs for the terminal device. The plurality of common BWPs may have a same frame structure numerology. It is assumed that numbers of the four common BWPs are a BWP 0, a BWP 1, a BWP 2, and a BWP 3. A bandwidth corresponding to the BWP 0 is set to be 20 M, a bandwidth corresponding to the BWP 1 is set to be 40 M, a bandwidth corresponding to the BWP 2 is set to be 60 M, and a bandwidth corresponding to the BWP 3 is set to be 80 M. In this case, the terminal device may determine, based on the radio frequency capability, a BWP for sidelink communication in the first time unit.

For example, as shown in FIG. 6, if the radio frequency bandwidth capability of the terminal device is 20 M, the terminal device may determine that a BWP for sidelink communication in the first time unit is the BWP 0. If the radio frequency bandwidth capability of the terminal device is 50 M, the terminal device may determine that a BWP for sidelink communication in the first time unit is the BWP 1 or the BWP 0. If the radio frequency bandwidth capability of the terminal device is 100 M, the terminal device may determine that a BWP for sidelink communication in the first time unit is the BWP 3, the BWP 2, the BWP 1, or the BWP 0. Alternatively, the terminal device may determine, based on a largest supported bandwidth, a BWP for sidelink communication in the first time unit. For example, if a largest radio frequency bandwidth capability supported by the terminal device is 20 M, the terminal device may determine that a BWP for sidelink communication in the first time unit is the BWP 0. If a largest radio frequency bandwidth capability supported by the terminal device is 50 M, the terminal device determines that a BWP for sidelink communication in the first time unit is the BWP 1. If a largest radio frequency bandwidth capability supported by the terminal device is 100 M, the terminal device determines that a BWP for sidelink communication in the first time unit is the BWP 3.

Optionally, the BWP for sidelink communication in the first time unit may be a BWP corresponding to a largest bandwidth that is less than or equal to the radio frequency bandwidth capability. Alternatively, it is determined that the BWP for sidelink communication in the first time unit is a BWP corresponding to a largest bandwidth that is less than or equal to the radio frequency bandwidth capability. Alternatively, it is determined that a BWP in which the terminal device operates in the first time unit is a BWP corresponding to a largest bandwidth that is less than or equal to the radio frequency bandwidth capability. Optionally, in this application, an activated BWP may also be referred to as an operating BWP. In this embodiment of this application, the radio frequency capability of the terminal device may be considered, to implement sidelink communication and improve performance. The terminal device may receive signals on more resources to avoid missing detection of sidelink signals. In addition, a BWP is activated based on a capability of the terminal device. This can maximize resource utilization and reduce a probability of a resource conflict during transmission on a sidelink.

Optionally, in this embodiment of this application, for one CC, a dedicated BWP set may be configured for the terminal device. The dedicated BWP set may include one or more dedicated BWPs. The one or more dedicated BWPs may be referred to as candidate dedicated BWPs. The candidate dedicated BWPs may include a configured dedicated BWP and/or a possible dedicated BWP predefined in a protocol. When the first BWP is the first dedicated BWP, the terminal device may determine, based on the frame structure numerology of the common BWP, the first dedicated BWP in one or more candidate dedicated BWPs in the dedicated BWP set. The frame structure numerology of the first dedicated BWP is the same as the frame structure numerology of the common BWP. For example, as shown in FIG. 5a, the dedicated BWP set includes four dedicated BWPs, and numbers of the four dedicated BWPs are a dedicated BWP 1, a dedicated BWP 2, a dedicated BWP 3, and a dedicated BWP 4. Frame structure numerologies of the dedicated BWP 1 and the dedicated BWP 2 are the second frame structure numerology, a frame structure numerology of the dedicated BWP 3 is the third frame structure numerology, a frame structure numerology of the dedicated BWP 4 is the first frame structure numerology, and the frame structure numerology of the dedicated BWP 4 is the same as that of the common BWP. The terminal device may determine that the dedicated BWP 4 is the first BWP, and perform sidelink communication in the BWP 4 in the first time unit.

It may be understood that, if the terminal device already operates in the first dedicated BWP before the first time unit, the terminal device does not need to activate the first dedicated BWP again in the first time unit, but directly performs sidelink communication in the first dedicated BWP. If the terminal device operates in a BWP other than the first dedicated BWP in the first time unit, the terminal device needs to activate the first dedicated BWP in the first time unit, and performs sidelink communication in the activated first dedicated BWP.

Optionally, the procedure shown in FIG. 3 may further include the following step: S302: The terminal device performs sidelink communication in a second dedicated BWP in a second time unit by using the second frame structure numerology. The sidelink communication in the second time unit may include unicast and/or multicast, that is, the sidelink communication in the second time unit may include "unicast", "multicast", "unicast and multicast", or the like. The second frame structure numerology is a frame structure numerology of the second dedicated BWP.

For example, still referring to FIG. 5a, the second time unit includes the slot n (slot n), and the terminal device performs sidelink communication in the dedicated BWP 1 in the slot n by using the second frame structure numerology. Alternatively, the terminal device performs sidelink communication in the dedicated BWP 2 in the slot n by using the second frame structure numerology. Alternatively, the terminal device performs sidelink communication in the dedicated BWP 3 in the slot n by using the third frame structure numerology. n is 0 or an integer greater than 0. In this embodiment of this application, the integer greater than 0 includes 1, 2, 3, or a larger integer. This is not limited in this embodiment of this application.

For example, for a CC, the network device may configure a dedicated BWP set for the terminal device. The dedicated BWP set may include one or more dedicated BWPs. The one or more dedicated BWPs may be referred to as candidate dedicated BWPs. The candidate dedicated BWPs may include a configured dedicated BWP and/or a possible dedicated BWP predefined in a protocol. The terminal device may determine a dedicated BWP in the dedicated BWP set, and perform sidelink communication in the dedicated BWP in the second time unit. For example, the terminal device may select a dedicated BWP from the candidate dedicated BWPs based on a radio frequency capability, and then perform sidelink communication in the dedicated BWP in the second time unit. A process thereof is similar to the foregoing process of determining a common BWP in the common BWP set based on a radio frequency capability, reference may be made to the foregoing description, and details are not described herein again. For example, the network device indicates, to the terminal device in the candidate dedicated BWPs, the second dedicated BWP used in the second time unit. The terminal device performs sidelink communication in the second dedicated BWP in the second time unit by using the second frame structure numerology.

It may be understood that, in this embodiment of this application, a BWP (for example, the first BWP and/or the second dedicated BWP) for sidelink communication in S301 and S302 in FIG. 3 may be referred to as a sidelink BWP (sidelink BWP, SL BWP), or referred to as a BWP for short.

Optionally, in this embodiment of this application, for activation of the first BWP and/or activation of the second dedicated BWP in FIG. 3, at least one of the following manners may be used. It should be noted that the first BWP may also be referred to as a first SL BWP, and the second dedicated BWP may also be referred to as a second dedicated SL BWP.

In an example 1, SL-BWP activation or deactivation is implemented based on downlink control information (down control information, DCI).

The network device may configure an SL BWP identifier for each SL BWP when configuring the SL BWP for the terminal device. The network device may send DCI to the terminal device. An SL BWP indication field in the DCI may indicate an SL BWP identifier, an SL BWP indicated by the SL BWP identifier is an activated SL BWP, and another SL BWP is a deactivated SL BWP.

For example, the network device configures four SL BWPs, namely, an SL BWP 0, an SL BWP 1, an SL BWP 2, and an SL BWP 3, for the terminal. However, a currently activated SL BWP is the BWP 0. If the SL BWP indication field in the DCI indicates the SL BWP 1, it indicates that the SL BWP 1 is the activated SL BWP, and the SL BWP 0, the SL BWP 2, and the SL BWP 3 are deactivated SL BWPs. For example, when there are four SL BWPs, two bits (bits) may be used to indicate the SL BWP identifier. Specifically, for example, 00 represents the SL BWP 0, 01 represents the SL BWP 1, 10 represents the SL BWP 2, and 11 represents the SL BWP 3. To be specific, when two bits in the DCI are 01, it indicates that the activated SL BWP is the SL BWP 1, and other SL BWPs are deactivated SL BWPs.

In an example 2, SL BWP activation or deactivation is implemented based on radio resource control RRC signaling.

The network device may send the RRC signaling to the terminal device, and the network device configures one or more SL BWPs for the terminal device through the RRC signaling. In this case, the SL BWP is a configured SL BWP. The RRC signaling may further indicate an activated SL BWP, for example, indicate an SL BWP identifier (identifier, ID) of the activated SL BWP. After receiving the RRC signaling, the terminal device may determine the activated SL BWP based on the signaling, and use another SL BWP of the terminal device as a deactivated SL BWP.

In an example 3, SL BWP activation or deactivation is implemented based on a timer (timer).

The network device may send RRC signaling to the terminal device, and the network device configures one or more SL BWPs for the terminal device through the RRC signaling. In this case, the SL BWP is a configured SL BWP. The RRC signaling may further include a timer indication. After receiving the RRC signaling, the terminal device may determine timing of a currently activated BWP based on the timer indication in the signaling. If no DCI is detected in the activated BWP within the timing, the activated BWP is deactivated after the timer expires, and a predefined BWP, an initially accessed BWP, or the like is activated. A specific activated BWP may be predefined in a protocol, or may be notified by a base station to the terminal device through signaling. For example, the currently activated BWP is a BWP 1, a predefined BWP is a BWP 2, and the timer is 20 ms. If no downlink control information DCI is detected in the activated BWP 1 within 20 ms, the BWP 1 is deactivated, and the BWP 2 is activated.

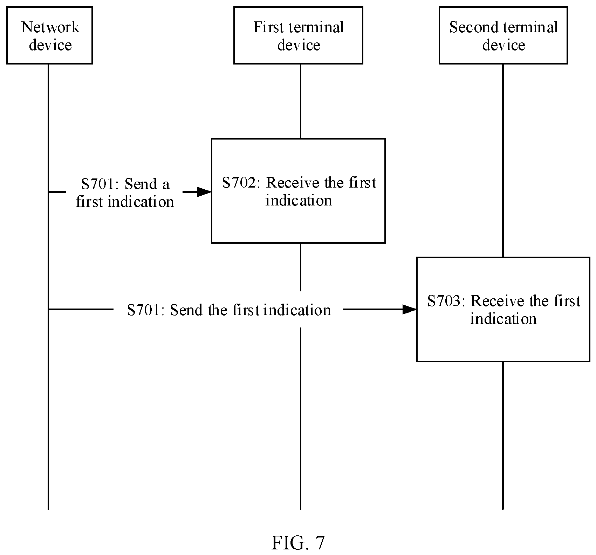

As shown in FIG. 7, a procedure of a communication method is provided. In the procedure shown in FIG. 7, a network device may be the radio access network device 103 or the network management system 104 in FIG. 1, a first terminal device may be the transmit-side terminal device 101 in FIG. 1, and a second terminal device may be the receive-side terminal device 102 in FIG. 1. The procedure includes the following steps.

S701: The network device sends a first indication, where the first indication is used to indicate a first time unit.

Specifically, the network device may indicate an absolute time position of the first time unit or a position of the first time unit. For example, a unit of the absolute time position may be millisecond (ms) or the like, and the position of the first time unit may be a position occupied by the first time unit, a position of the first time unit, or the like within a period whose length is N time units. A unit of the first time unit may be a subframe, a slot, a mini-slot, a sub-slot, a symbol, or the like. The first time unit may include one or more time units in the foregoing unit. N is a positive integer. In this embodiment of this application, the positive integer may be 1, 2, 3, 4, or a larger integer.

S702: The first terminal device receives the first indication.

S703: The second terminal device receives the first indication.

In this embodiment of this application, the network device in the procedure shown in FIG. 7 may be an access network device, and the access network device may send the first indication to the first terminal device and the second terminal device separately. Alternatively, the network device may be a network management system operated by the operator, and the network management system may send the first indication to the first terminal device and the second terminal device separately. Alternatively, the network device may be a network management system operated by an operator and an access network device, the network management system may send the first indication to the first terminal device, and the access network device may send the first indication to the second terminal device. Alternatively, the network management system may send the first indication to the second terminal device, and the access network device may send the first indication to the first terminal device.

Optionally, the first indication may also be referred to as first indication information. The first indication received by the first terminal device and the first indication received by the second terminal device may be sent through different signaling, or may be sent through same signaling. This is not specifically limited in this embodiment of this application.

For example, the first indication in the procedure shown in FIG. 7 may be indicated by using but is not limited to the following examples:

In an example 1, the first indication is used to indicate a time unit that is configured as the first time unit in the period whose length is N time units, where N is a positive integer greater than or equal to 1. The size N of the period may be indicated by the network device for the terminal device, or may be predefined.

In an example 1.1, the network device indicates, to the terminal device by using a bitmap (bitmap), the first time unit that is in the period whose length is N time units. The bitmap includes N bits, and the N bits are in a one-to-one correspondence with the N time units. If a value of a bit in the bitmap is t1, it indicates that the first time unit includes a time unit corresponding to the bit. If a value of a bit in the bitmap is t2 or is not t1, it indicates that the first time unit does not include a time unit corresponding to the bit. t1 and t2 are integers. For example, t1 is equal to 1, and t2 is equal to 0.

For example, the length N of the period is 5 and the time unit is a slot. The network device may indicate the first time unit to the terminal device by using five bits (bit). One bit corresponds to one slot. If a value of the bit is 1, it indicates that the network device indicates the slot, that is, the first time unit includes the slot. If a value of the bit is 0, it indicates that the network device does not indicate the slot, that is, the first time unit does not include the slot. A value and a meaning of 0 or 1 may be changed. For example, if a bitmap (bitmap) of the five bits is 10000, it indicates that the network device indicates the first slot in every five slots, that is, the first time unit includes the first slot in every five slots, and the first time unit does not include the other four slots in every five slots. Optionally, the other four slots are second time units, or the other four slots include a second time unit.

In an example 1.2, the network device indicates, to the terminal device by using a bitmap, the first time unit in a period whose length is N milliseconds. The bitmap includes N bits, and the N bits are in a one-to-one correspondence with the N milliseconds. If a value of a bit in the bitmap is t3, it indicates that the first time unit includes a millisecond corresponding to the bit. If a value of a bit in the bitmap is t4 or is not t3, it indicates that the first time unit does not include a millisecond corresponding to the bit. t3 and t4 are integers. For example, a value of t3 may be 1, and a value of t4 may be 0

For example, if N is 5, five bits may be used for indication, and one bit corresponds to one ms. If a value of the bit is 1, it indicates that the first time unit includes one millisecond corresponding to the bit. If a value of the bit is 0, it indicates that the first time unit does not include one millisecond corresponding to the bit. A value and meaning of 0 or 1 may be changed. For example, if a bitmap (bitmap) of the five bits is 10000, it indicates that the first time unit includes the first millisecond in every five milliseconds, and the first time unit does not include other four milliseconds in every five milliseconds. Optionally, the other four milliseconds are second time units, or the other four milliseconds include a second time unit.

Optionally, a quantity of bits included in the first indication in the foregoing example may be determined based on a period. For example, if a length of the period is N, the quantity of bits included in the first indication may be N.

Optionally, the period in the foregoing example may be a predefined period N, that is, the network device may not indicate the period. The terminal device and/or the network device may determine the period based on a predefined method, and further determine the first time unit in the period.

Optionally, the period in the foregoing example may be configured by the network device for the terminal device. Periods corresponding to different subcarrier spacings may be independently configured. Periods corresponding to different subcarrier spacings are the same or different. For example, it may be predefined that a period of a subcarrier spacing of 15 kHz is N1, a period of a subcarrier spacing of 30 kHz is N2, a period of a subcarrier spacing of 60 kHz is N3, a period of a subcarrier spacing of 120 kHz is N4, and so on.

In an example 2, the first indication is used to indicate at least one of a configuration period, a transmission offset, and/or a quantity of first time units. The transmission offset may also be referred to as an offset, an offset of the first time unit in the period, or the like. For example, the transmission offset may include a first transmission offset and a second transmission offset. The first transmission offset and the second transmission offset are separately described in detail in the following example 2.1 and example 2.2. The network device may send the first indication to the terminal device, and the terminal device may receive the first indication sent by the network device. The terminal device may determine, based on the first indication sent by the network device, at least one of the configuration period, the transmission offset, and/or the quantity of first time units, or the terminal device may determine the first time unit based on the first indication sent by the network device. Optionally, in this embodiment of this application, the period configuration may also be referred to as period for short. Optionally, the quantity of first time units may also be referred to as a number of first time units, a number of first time units in the period, or the like.

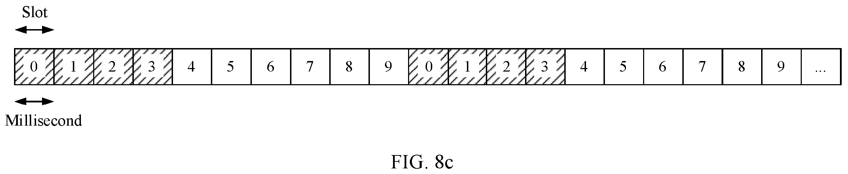

In the example 2.1, the network device may indicate the configuration period and the first transmission offset (offset) to the terminal device through the first indication. When receiving the first indication, the terminal device may determine the period N of the first time unit and the first transmission offset based on the first indication, or may determine the first time unit based on the first indication. The configuration period is set to N, where N is a positive integer. The first transmission offset is an offset of each of the first time units in every N time units relative to the 1^{st} time unit or a start time unit in the N time units. Numbers of the N time units whose configuration period is N may be 0 to N-1, N to 2N-1, or the like, and the rest may be deduced by analogy. Alternatively, numbers of the N time units whose configuration period is N may be 1 to N, or N+1 to 2N, or the like, and the rest may be deduced by analogy. For example, as shown in FIG. 8c, the configuration period is defined to be 10 time units, indexes of the 10 time units may be 0 to 9, and the first transmission offset is {0, 1, 2, 3}. In this case, first time units included in each period are a time unit (namely, a time unit 0) that is offset by 0 relative to the time unit 0, a time unit (namely, a time unit 1) that is offset by 1 relative to the time unit 0, a time unit (namely, a time unit 2) that is offset by 2 relative to the time unit 0, and a time unit (namely, a time unit 3) that is offset by 3 relative to the time unit 0. For the time unit indicated by the first indication, refer to parts filled with slashes in FIG. 8c. Details are not described herein again.

In this embodiment of this application, the network device may indicate the configuration period and the first transmission offset, that is, the first indication may include the configuration period and the first transmission offset. Alternatively, a plurality of configuration periods and a plurality of transmission offsets may be predefined, and an index is set for each configuration period and transmission offset. The network device may indicate an index for a configuration period and the first transmission offset, that is, the first indication may include the index for the configuration period and the transmission offset.

Optionally, a correspondence between a configuration period, a transmission offset, and an index may be predefined, or may be notified by the network device to the terminal device through signaling. The network device may send the first indication, where the first indication is used to indicate the index. The terminal device may receive the first indication. The terminal device may determine the index based on the first indication, and determine the configuration period and the transmission offset based on the index and the correspondence. Alternatively, the terminal device may determine the first time unit based on the first indication sent by the network device.

**Table 1**

| Index | Binary bit value (binary) | Configuration period (configuration period) | Transmission offset (transmission offset) |
|---|---|---|---|
| 0 | 0000 | 2 | {0} |
| 1 | 0001 | 2 | {1} |
| 2 | 0010 | 5 | {0} |
| 3 | 0011 | 5 | {1} |
| 4 | 0100 | 5 | {2} |
| 5 | 0101 | 5 | {3} |
| 6 | 0110 | 5 | {4} |
| 7 | 0111 | 5 | {0, 1} |
| 8 | 1000 | 5 | {2, 3} |
| 9 | 1001 | 10 | {0} |
| 10 | 1010 | 10 | {1} |
| 11 | 1011 | 10 | {2} |
| 12 | 1100 | 10 | {3} |
| 13 | 1101 | 10 | {0, 1} |
| 14 | 1110 | 10 | {2, 3} |
| 15 | 1111 | 10 | {0, 1, 2, 3} |

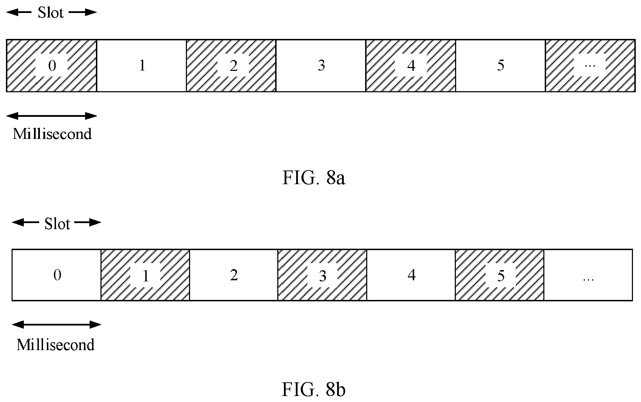

For example, as shown in Table 1, 16 configuration periods and transmission offsets may be predefined, and indexes may be set for the 16 configuration periods and transmission offsets, where the indexes may be 0 to 15 separately. When the network device indicates a configuration period and transmission offset whose index is 0, a value of the first indication is 0000. After receiving the first indication, the terminal device may determine that the configuration period indicated by the first indication is two time units and that the first transmission offset is 0 based on the correspondence between the index, the configuration period, and the transmission offset. The terminal device may determine that the 1^{st} time unit in time units in each period of 2 is the first time unit. For example, as shown in FIG. 8a, indexes of time units whose period is 2 may be 0 and 1 separately, 2 and 3 separately, 4 and 5 separately, or the like, and the rest may be deduced by analogy. Using a period including a time unit 0 and a time unit 1 as an example, first time units in the period include a time unit (namely, the time unit 0) that is offset by 0 relative to the time unit 0, but does not include a time unit (namely, the time unit 1) that is offset by 1 relative to the time unit 0. A unit of the first time unit may be a slot or a millisecond. For details of the first time unit indicated by the first indication, refer to parts filled with slashes shown in FIG. 8a.

For example, when the network device indicates a configuration period and transmission offset whose index is 1, a value of the first indication is 0001. After receiving the first indication, the terminal device may determine that the configuration period of the first time unit is two time units and that the transmission offset is 1 based on the correspondence between the index, the configuration period, and the transmission offset. The terminal device may determine that the 2^{nd} time unit in every two time units is the first time unit. For example, as shown in FIG. 8b, indexes of time units whose period is 2 may be 0 and 1 separately, 2 and 3 separately, 4 and 5 separately, or the like, and the rest may be deduced by analogy. Using a period including a time unit 0 and a time unit 1 as an example, first time units in the period include a time unit (namely, the time unit 1) that is offset by 1 relative to the time unit 0, but does not include a time unit (namely, the time unit 1) that is offset by 0 relative to the time unit 0. A unit of the first time unit may be a slot or a millisecond. For details of the first time unit, refer to parts filled with slashes shown in FIG. 8b.

For example, when the network device indicates a configuration period and transmission offset whose index is 15, a value of the first indication is 1111, or the first indication includes 1111. After receiving the first indication, the terminal device may determine that the configuration period of the first time unit is 10 time units and that the transmission offset is {0, 1, 2, 3} based on the correspondence between the index, the configuration period, and the transmission offset. The terminal device may determine that the 1^{st} time unit to the 4^{th} time unit in every 10 time units are first time units. For example, as shown in FIG. 8c, when the period is set to 10, indexes of the 10 time units whose period is 10 are 0 to 9, and indexes of the 1^{st} time unit to the 4^{th} time unit are 0 to 3. That is, time units whose indexes may be 0 to 3 in every 10 time units are the first time unit. For example, as shown in FIG. 8c, the indexes of the time units whose period is 10 may be 0 to 9 separately, and the first transmission offset is {0, 1, 2, 3}. In one period, time units included in the first time unit are a time unit with an index 0 (an offset of which relative to the time unit with the index 0 is 0), a time unit with an index 1 (an offset of which relative to the time unit 0 with the index 0 is 1), a time unit with an index 2 (an offset of which relative to the time unit with the index 0 is 2), and a time unit with an index 3 (an offset of which relative to the time unit with the index 0 is 3).

In the example 2.2, the network device may indicate the configuration period, the second transmission offset, and the quantity of first time units to the terminal device through the first indication, where the second transmission offset is used to indicate an offset of a start first time unit in the period relative to a start time unit in the period. After receiving the first indication, the terminal device may determine the first time unit based on the first indication. For example, the terminal device may determine the configuration period based on the first indication, determine N time units whose configuration period is N, determine the start first time unit in the period based on the second transmission offset (namely, an offset of the 1^{st} first time unit in the period relative to the 1^{st} time unit in the N time units), and determine first time units in the period based on the start first time unit in the period and the quantity of first time units in the period. Numbers of the N time units whose configuration period is N may be 0 to N-1, N to 2N-1, or the like, and the rest may be deduced by analogy. Alternatively, numbers of the N time units whose configuration period is N may be 1 to N, or N+1 to 2N, or the like, and the rest may be deduced by analogy. For example, as shown in FIG. 8c, the network device may indicate to the terminal device that the configuration period is 10, the second transmission offset is 0, and the quantity of first time units is 4. After receiving the indication, the terminal device may determine that time units numbered from 0 to 9 are one period based on the configuration period, determine that the start first time unit in the period is a time unit whose index is 0 (where an offset of the time unit relative to the 1^{st} time unit, namely, the time unit 0, in the 10 time units numbered from 0 to 9 is 0) based on the transmission offset 0, and determine that a total of four first time units are included in the period based on the quantity 4 of first time units in the period. Subsequent three first time units other than the 1^{st} first time unit whose index is 0 may be consecutive or inconsecutive (for example, predefined time units spaced by an interval). In the example shown in FIG. 8c, that the four first time units are consecutive is used as an example for description. For details about the four first time units included in the first time units, refer to the parts filled with slashes in FIG. 8c. It may be understood that, in this example, the first indication may directly indicate the configuration period, the second transmission offset, and the quantity of first time units. Alternatively, an index is preset for indication of the configuration period, the second transmission offset, and the quantity of first time units, and the first indication may indicate the index or the like corresponding to the configuration period, the second transmission offset, and the quantity of first time units. Optionally, a correspondence between the configuration period, the transmission offset, the quantity of time units, and the index may be predefined. The terminal device may determine the index based on the first indication, and determine the configuration period, the transmission offset, and the quantity of time units based on the index and the correspondence.

In an example 2.3, the network device may indicate the configuration period and the second transmission offset to the terminal device through the first indication. This example is similar to the example 2.2. A difference lies in that the quantity of first time units is predefined, and does not need to be indicated by the network device. For example, it may be predefined that each period includes only one first time unit, it may be predefined that a plurality of consecutive time units in each period are first time units, or it may be predefined that time units in a plurality of time units spaced by a preset interval in each period are first time units, or the like.

For example, using a first time unit numbered 1111 in Table 1 as an example, the network device may indicate that a period of the first time unit is 10 ms or 10 slots and that an offset is 0 to the terminal device. The quantity of first time units may be predefined. For example, there is only one first time unit in the period, a plurality of consecutive time units may be predefined as first time units, or time units in a plurality of time units spaced by an interval may be predefined as first time units.

In an example 2.4, the network device may indicate the configuration period to the terminal device through the first indication. The process is similar to those of the example 2.1 and the example 2.2. A difference lies in that the transmission offset may be predefined, and the transmission offset may be the first transmission offset and the second transmission offset. Optionally, the quantity of first time units may further be predefined when the transmission offset is the second transmission offset.

For example, the network device indicates that the period of the first time unit is 10 ms or 10 slots to the terminal device. The offset may be predefined in a protocol, and for example, the offset is 0. Optionally, the quantity of first time units may be predefined. For example, there is only one first time unit in the period, a plurality of consecutive time units may be predefined as first time units, or time units in a plurality of time units spaced by an interval may be predefined as first time units.

In an example 2.5, the network device may indicate the transmission offset to the terminal device through the first indication, where the transmission offset may be the first transmission offset and/or the second transmission offset. This example is similar to the example 2.1 and the example 2.2. A difference lies in that the configuration period and the quantity of first time units may be predefined. For example, the configuration period may be predefined as 10 time units, and a unit of the time unit is a slot, a millisecond, or the like.

For example, the network device indicates the transmission offset of the first time unit in the period to the terminal device. For example, the period may be predefined as N, and for example, N is 10 ms or 10 slots. The first indication is used to indicate the transmission offset. Optionally, the quantity of first time units may be predefined. For example, there is only one first time unit in the period, a plurality of consecutive time units may be predefined as first time units, or time units in a plurality of time units spaced by an interval may be predefined as first time units.

In an example 2.6, the network device may indicate the quantity of first time units to the terminal device through the first indication. This example is similar to the example 2.2. A difference lies in that the transmission offset and the configuration period may be predefined. Optionally, the transmission offset may be the second transmission offset.

For example, the network device indicates the quantity of first time units in the period to the terminal device. For example, the period may be predefined as N, and for example, N is 10 ms or 10 slots. The first indication is used to indicate the quantity of first time units in the period. Optionally, the offset may be predefined. For example, the offset is 0, that is, the first time unit starts from the 1^{st} time unit in the period. First time units corresponding to the quantity of first time units may be a plurality of consecutive time units, or time units in a plurality of time units spaced by an interval may be predefined as first time units. For example, time units spaced by an interval of one time unit are the first time units.

Optionally, in the example 1 and/or the example 2, a time unit other than the first time unit in the period is the second time unit. In this case, indication of the first time unit performed by the network device is equivalent to indication of the second time unit performed by the network device. Alternatively, optionally, the period includes the first time unit and the second time unit.

In an example of this application, different terminal devices may support different frame structure numerologies. For example, as shown in Table 2, five frame structure numerologies are defined in a system, and indexes may be sequentially 0 to 4. The frame structure numerology includes a subcarrier spacing and/or a CP, and different frame structure numerologies may include different subcarrier spacings. Lengths of time domain symbols may be different in the different subcarrier spacings. For example, if a first subcarrier spacing is k times of a second subcarrier spacing, a sum of lengths of time domain symbols in k first subcarrier spacings is equal to a length of a time domain symbol in one second subcarrier spacing. Optionally, a length of one time domain symbol in the second subcarrier spacing is k times a length of one time domain symbol in the first subcarrier spacing. Quantities of time domain symbols included in slots may be the same or different, quantities of slots included in subframes may be different, and quantities of slots included in frames may be different when different frame structure numerologies are used. For a quantity ${N}_{symb}^{slot}$ of time domain symbols included in each slot, a quantity ${N}_{slot}^{subframe , μ}$ of slots included in each subframe, and a quantity ${N}_{slot}^{frame , μ}$ of slots included in each frame when the different frame structure numerologies are used, refer to the following Table 3.

**Table 2 Supported frame structure numerologies (numerologies)**

| *µ* | Δ*f* = *2^{µ}*·15[kHz] | Cyclic prefix (cyclic prefix, CP) |
|---|---|---|
| 0 | 15 | Normal (normal) |
| 1 | 30 | Normal (normal) |
| 2 | 60 | Normal (normal), extended (extended) |
| 3 | 120 | Normal (normal) |
| 4 | 240 | Normal (normal) |

**Table 3**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Based on the foregoing analysis, it can be learned that lengths of time units corresponding to the different frame structure numerologies may be different. For example, that a unit of the time unit is a slot is used as an example. A subcarrier spacing included in a first frame structure numerology is 15 kHz, and a subcarrier spacing included in a second frame structure numerology is 30 kHz. A length of one time unit corresponding to the first frame structure numerology may be twice a length of one time unit corresponding to the second frame structure numerology. Because the terminal device supports different frame structure numerologies, how to indicate first time units corresponding to the different frame structure numerologies in this case is a problem that needs to be resolved in this application.

In a first embodiment, the network device indicates a first time unit corresponding to a reference frame structure numerology, and the terminal device may determine a first time unit corresponding to the first frame structure numerology based on a relationship between the first frame structure numerology and the reference frame structure numerology. For example, the network device may send the first indication. Correspondingly, the terminal device may receive the first indication. The first indication is used to indicate the first time unit corresponding to the reference frame structure numerology. The terminal device may determine the first time unit corresponding to the reference frame structure numerology based on the reference frame structure numerology, the first frame structure numerology, and the first time unit corresponding to the first frame structure numerology. The first frame structure numerology is a frame structure numerology of the first BWP. The reference frame structure numerology may be predefined in a protocol, or may be configured by the network device for the terminal device. It may be understood that, for a manner of sending the first indication by the network device, refer to the foregoing example for indication, or an example other than the foregoing example may be used for indication. This is not limited in this application.

Optionally, the terminal device may determine, based on the reference frame structure numerology, the second frame structure numerology, and the first time unit corresponding to the reference frame structure numerology, the first time unit corresponding to the second frame structure numerology, where the second frame structure numerology is the frame structure numerology of the second dedicated BWP.

The following uses an example in which the first time unit corresponding to the first frame structure numerology is determined for description. A process of determining the first time unit corresponding to the second frame structure numerology is similar to that of determining the first time unit corresponding to the first frame structure numerology, and details are not described herein again. A description is provided by using the following example in which the first frame structure numerology is represented by *µ* _{BWP}, and the reference frame structure numerology is represented by *µ*_{reference}.

If *µ*_{BWP} > *µ*_{reference}, a period corresponding to the reference frame structure numerology is N slots, and a period corresponding to the first frame structure numerology is *N ·* 2 *^{µ_{BWP} - µ_{reference}}* slots.

It is assumed that numbers of the N slots in the period corresponding to the reference frame structure numerology are 0 to N-1, and numbers of the *N · 2 ^{µ_{BWP} - µ_{reference}}* slots in the period corresponding to the first frame structure numerology are 0 to *N ·* 2*^{µ_{BWP} - µ_{reference}}* -1. For example, a slot whose number is i and that corresponds to the reference frame structure numerology corresponds to slots whose numbers are *i ·* 2*^{µ_{BWP} - µ_{reference}}, i ·* 2*^{µ_{BWP} - µ_{reference}}* + 1, ..., and *i ·* 2*^{µ_{BWP} - µ_{reference}}* + 2*^{µ_{BWP} - µ_{reference}}* - 1 and that correspond to the first frame structure numerology.

In an example 3.1.1, a unit of the first time unit is a slot. A plurality of slots that correspond to the first frame structure numerology and that correspond to one slot in the first time unit corresponding to the reference frame structure numerology are all first time units corresponding to the first frame structure numerology.

For example, all slots that correspond to the first frame structure numerology and that correspond to one slot in the first time unit corresponding to the reference frame structure numerology are all first time units corresponding to the first frame structure numerology.

For example, if a slot t corresponding to the reference frame structure numerology is a first time unit, 2*^{µ_{BWP} - µ_{reference}}* slots that correspond to the first frame structure numerology and that correspond to the slot t corresponding to the reference frame structure numerology are first time units.

Optionally, if a slot whose number is i and that corresponds to the reference frame structure numerology is the first time unit, slots whose numbers are *i ·* 2*^{µ_{BWP} - µ_{reference}}*, *i ·* 2*^{µ_{BWP} - µ_{reference}}* + 1 , ..., and *i* · 2*^{µ_{BWP} - µ_{reference}}* + 2*^{µ_{BWP} - µ_{reference}}* - 1 and that correspond to the first frame structure numerology are the first time units.

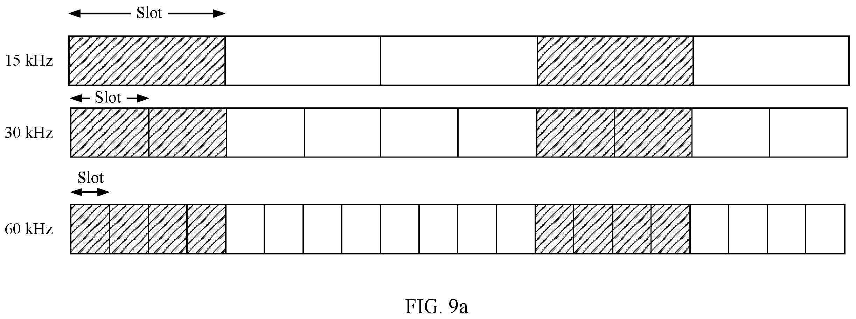

For example, as shown in FIG. 9a, if the reference frame structure numerology is 15 kHz, and the first frame structure numerology is 30 kHz, one slot indicated by the first time unit corresponding to the reference frame structure numerology corresponds to two slots corresponding to the first frame structure numerology. If the network device indicates that the 1^{st} slot and the 4^{th} slot that correspond to the reference frame structure numerology are first time units, the terminal device may determine that the 1^{st} slot, the 2^{nd} slot, the 7^{th} slot, and the 8^{th} slot that correspond to the first frame structure numerology are first time units. When the reference frame structure numerology is 30 kHz and the first frame structure numerology is 60 kHz, a process is similar to the foregoing process, and details are not described herein again. For first time units corresponding to different frame structure numerologies, refer to parts filled with slashes in FIG. 9a.

In an example 3.1.2, one slot that corresponds to the first frame structure numerology and that corresponds to one slot in the first time unit corresponding to the reference frame structure numerology is the first time unit corresponding to the first frame structure numerology.

For example, if one slot in the first time unit corresponding to the reference frame structure numerology is the first time unit, one slot in a plurality of slots that correspond to the first frame structure numerology and that correspond to the slot corresponding to the reference frame structure numerology is the first time unit corresponding to the first frame structure numerology.

The following uses an example in which the 1^{st} slot in the plurality of slots is the first time unit. A first time unit at another position is similar, for example, the middle slot or the last slot. Details are not described herein.

Optionally, a position of a first time unit in the plurality of slots may be predefined, or may be notified by the network device to the terminal through signaling. Specifically, this is not limited herein in this application.

For example, if a slot t corresponding to the reference frame structure numerology is a first time unit, the 1^{st} slot in 2*^{µ_{BWP} - µ_{reference}}* slots that correspond to the first frame structure numerology and that correspond to the slot t corresponding to the reference frame structure numerology is a first time unit.

Optionally, if a slot whose number is i and that corresponds to the reference frame structure numerology is the first time unit, a slot whose number is *i ·* 2*^{µ_{BWP} - µ_{reference}}* and that corresponds to the first frame structure numerology is the first time unit.

For example, if a slot t corresponding to the reference frame structure numerology is a first time unit, the last slot in 2*^{µ_{BWP} - µ_{reference}}* slots that correspond to the first frame structure numerology and that correspond to the slot t corresponding to the reference frame structure numerology is a first time unit.

Optionally, if a slot whose number is i and that corresponds to the reference frame structure numerology is the first time unit, a slot whose number is *i ·* 2*^{µ_{BWP} - µ_{reference}}* + 2*^{µ_{BWP} - µ_{reference}}* - 1 and that corresponds to the first frame structure numerology is the first time unit.

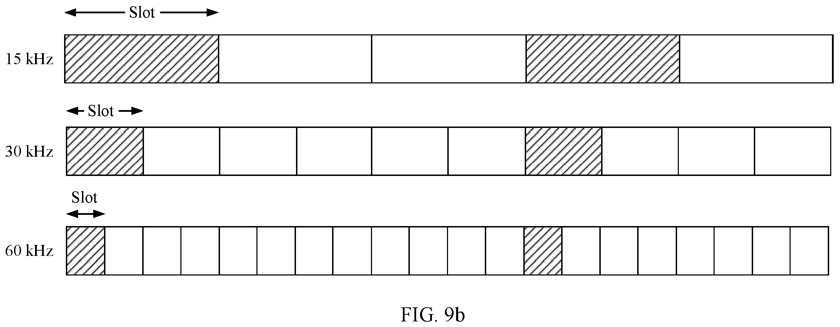

For example, the 1^{st} slot that corresponds to the first frame structure numerology and that corresponds to one slot in the first time unit corresponding to the reference frame structure numerology is the first time unit corresponding to the first frame structure numerology. As shown in FIG. 9b, if the reference frame structure numerology is 15 kHz, and the first frame structure numerology is 30 kHz, one slot corresponding to the reference frame structure numerology corresponds to two slots corresponding to the first frame structure numerology. For example, if the network device indicates that the 1^{st} slot and the 4^{th} slot that correspond to the reference frame structure numerology are first time units, the terminal device may determine that the 1^{st} slot and the 7^{th} slot that correspond to the first frame structure numerology are first time units. Alternatively, the terminal device determines that the 2^{nd} slot and the 8^{th} slot that correspond to the first frame structure numerology are first time units, and so on. When the reference frame structure numerology is 30 kHz and the first frame structure numerology is 60 kHz, a process is similar to the foregoing process, and details are not described again. For first time units corresponding to different frame structure numerologies, refer to parts filled with slashes in FIG. 9b.

If *µ*_{BWP} < *µ*_{reference}, one slot corresponding to the reference frame structure numerology corresponds to one slot corresponding to the first frame structure numerology.

In an example 3.1.3, one slot that corresponds to the first frame structure numerology and that corresponds to one slot in the first time unit corresponding to the reference frame structure numerology is the first time unit corresponding to the first frame structure numerology.

For example, if a slot t corresponding to the reference frame structure numerology is a first time unit, one slot that corresponds to the first frame structure numerology and that corresponds to the slot t corresponding to the reference frame structure numerology is a first time unit.

Optionally, if a slot whose number is i and that corresponds to the reference frame structure numerology is a first time unit, a slot whose number is $\left⌊i/{2}^{{μ}_{BWP} - {μ}_{reference}}\right⌋$ and that corresponds to the first frame structure numerology is a first time unit.

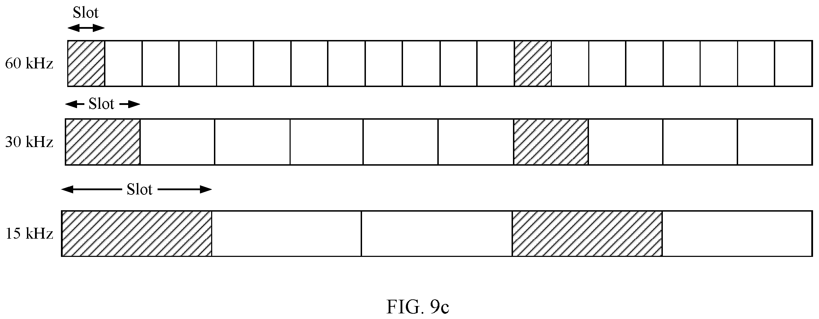

As shown in FIG. 9c, if the reference frame structure numerology is 60 kHz, and the first frame structure numerology is 30 kHz, the network device indicates that the 1^{st} slot and the 13^{th} slot corresponding to the reference frame structure numerology are first time units. The terminal device may determine that the 1^{st} slot and the 7^{th} slot that correspond to the first frame structure numerology are first time unit corresponding to the first frame structure numerology. If the reference frame structure numerology is 30 kHz, and the first frame structure numerology is 15 kHz, a process is similar to the foregoing process, and details are not described herein again. For first time units corresponding to different frame structure numerologies, refer to parts filled with slashes in FIG. 9c. Details are not described herein again.

In this embodiment of this application, based on the first time unit corresponding to the reference frame structure numerology, first time units corresponding to different frame structure numerologies may be indicated, thereby reducing signaling overheads.

In a second example not forming part of the invention, the network device indicates first time units corresponding to one or more frame structure numerologies, and the one or more frame structure numerologies include a first frame structure numerology and/or a second frame structure numerology. For example, the network device indicates a first time unit corresponding to the first frame structure numerology and/or a first time unit corresponding to the second frame structure numerology. The terminal device may determine, based on the first time unit corresponding to the first frame structure numerology and indicated by the network device, the first time unit corresponding to the first frame structure numerology, and/or the terminal device may determine, based on the first time unit corresponding to the second frame structure numerology and indicated by the network device, the first time unit corresponding to the second frame structure numerology. For example, the network device sends a first indication, where the first indication is used to indicate the first time units corresponding to the one or more frame structure numerologies. The terminal device determines, based on the first time units corresponding to the one or more frame structure numerologies, the first time unit corresponding to the first frame structure numerology, where the one or more frame structure numerologies include the first frame structure numerology, and the first frame structure numerology is a frame structure numerology of the first BWP; and/or determines, based on the first time units corresponding to the one or more frame structure numerologies, the first time unit corresponding to the second frame structure numerology, where the one or more frame structure numerologies include the second frame structure numerology, and the second frame structure numerology is a frame structure numerology of the second dedicated BWP.

For example, in this embodiment of this application, a bitmap manner of indicating a slot in a period is used as an example. If a frame structure numerology of an SL BWP configured by the terminal device is 15 kHz, the network device may indicate a first time unit corresponding to 15 kHz to the terminal device. For example, for the first time unit indicated by 15 kHz, one period may be five slots, and may be indicated by using a 5-bit bitmap. For example, 10010 indicates that the 1^{st} slot and the 4^{th} slot in the five slots in the period are first time units. For example, if the first frame structure numerology is 30 kHz, the network device may indicate a first time unit corresponding to 30 kHz to the terminal device. For example, for the first time unit indicated by 15 kHz, one period may be 10 slots, and may be indicated by using a 10-bit bitmap. For example, 1001001001 indicates that the 1^{st} slot, the 4^{th} slot, the 7^{th} slot, and the 10^{th} slot in the 10 slots in the period are first time units. For example, if the first frame structure numerology is 60 kHz, the network device may indicate a first time unit corresponding to 60 kHz to the terminal device. For example, for the first time unit indicated by 60 kHz, one period may be four slots, and may be indicated by using four bits. For example, 1000 indicates that the 1^{st} slot in the four slots in the period is a first time unit. This considers features of time units of different frame structure numerologies, so that indication is more flexible. Optionally, in signaling for configuring the SL BWP, the first time unit corresponding to the frame structure numerology of the SL BWP may be indicated.

For example, in this embodiment of this application, a bitmap manner of indicating a slot in a period is used as an example. If a frame structure numerology of an SL BWP configured by the terminal device is 15 kHz, the network device may indicate a first time unit corresponding to 15 kHz to the terminal device. For example, for the first time unit indicated by 15 kHz, one period may be five slots, and may be indicated by using a 5-bit bitmap. For example, 10010 indicates that the 1^{st} slot and the 4^{th} slot in the five slots in the period are first time units. For example, if the second frame structure numerology is 30 kHz, the network device may indicate a first time unit corresponding to 30 kHz to the terminal device. For example, for the first time unit indicated by 30 kHz, one period may be 10 slots, and may be indicated by using a 10-bit bitmap. For example, 1001001001 indicates that the 1^{st} slot, the 4^{th} slot, the 7^{th} slot, and the 10^{th} slot in the 10 slots in the period are first time units. For example, if the second frame structure numerology is 60 kHz, the network device may indicate a first time unit corresponding to 60 kHz to the terminal device. For example, for the first time unit indicated by 60 kHz, one period may be four slots, and may be indicated by using four bits. For example, 1000 indicates that the 1^{st} slot in the four slots in the period is a first time unit. This considers features of time units of different frame structure numerologies, so that indication is more flexible. Optionally, in signaling for configuring the SL BWP, the first time unit corresponding to the frame structure numerology of the SL BWP may be indicated.

For example, in this embodiment of this application, a bitmap manner of indicating a slot in a period is used as an example. If frame structure numerologies configured on a terminal device side include 15 kHz, 30 kHz, and 60 kHz, the network device may separately indicate first time units for different frame structure numerologies. For example, for the first time unit indicated by 15 kHz, one period may be five slots, and may be indicated by using a 5-bit bitmap. For example, 10010 indicates that the 1^{st} slot and the 4^{th} slot in the five slots in the period are first time units. For the first time unit indicated by 30 kHz, one period may be 10 slots, and may be indicated by using a 10-bit bitmap. For example, 1001001001 indicates that the 1^{st} slot, the 4^{th} slot, the 7^{th} slot, and the 10^{th} slot in the 10 slots in the period are first time units. For the first time unit indicated by 60 kHz, one period may be four slots, and may be indicated by using four bits. For example, 1000 indicates that the 1^{st} slot in the four slots in the period is a first time unit. This considers features of time units of different frame structure numerologies, so that indication is more flexible. Optionally, in signaling for configuring the SL BWP, the first time unit corresponding to the frame structure numerology of the SL BWP may be indicated.

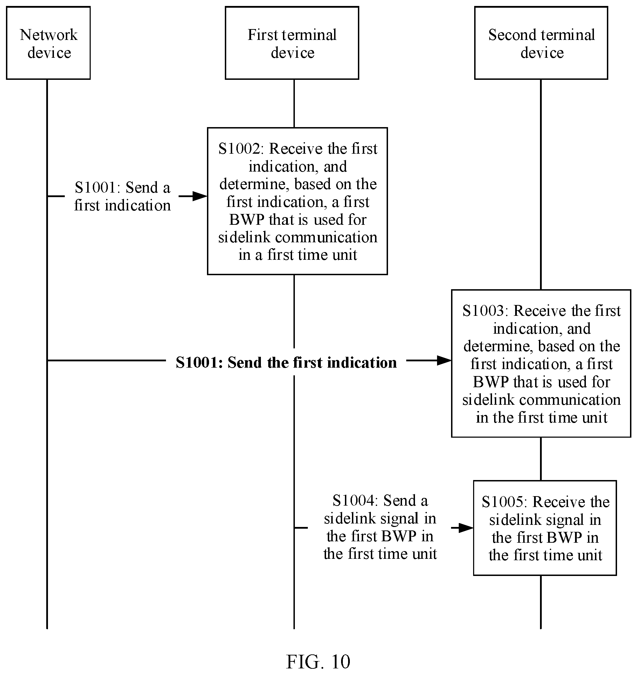

As shown in FIG. 10, a procedure of a communication method is provided. In the procedure, a first terminal device may be the transmit-side terminal device 101 in FIG. 1, a second terminal device may be the receive-side terminal device 102 in FIG. 1, and a base station may be the access network device 103 or the network management system 104 in FIG. 1. The procedure includes the following steps.

S1001: A network device sends a first indication, where the first indication is used to indicate a first time unit, and a time unit corresponding to the first time unit may also be referred to as a time pattern (time pattern) or a time domain pattern. A moment indicated by the first time unit supports only one frame structure numerology, or a moment indicated by the first time unit supports communication that uses only one frame structure numerology.

For example, the network device may be an access network device. For example, the access network device may configure a first indication for a terminal device through system information, and the first indication is used to indicate a first time unit. The terminal device may determine the first time unit based on the first indication in the system information.

For example, the network device may be an access network device. For example, the access network device may configure a first indication for a terminal device through RRC dedicated signaling, and the first indication is used to indicate a first time unit. The terminal device may determine the first time unit by using the first indication in the RRC dedicated signaling.

For example, if a terminal device receives both a first indication configured through preconfiguration signaling and a first indication configured through system information, the terminal device may use the first indication configured through the system information. In other words, the system information may overwrite the preconfiguration signaling, or a priority of the system information is higher than a priority of the preconfiguration signaling. Optionally, if the terminal device receives both a first indication configured through system information and a first indication configured through RRC dedicated signaling, the terminal device uses the first indication configured through the dedicated signaling. In other words, the RRC dedicated signaling may overwrite the system information, or a priority of the RRC dedicated signaling is higher than a priority of the system information.

For example, the network device may alternatively be a special terminal device, and the special terminal device may be a terminal device having a scheduling function and/or an auxiliary scheduling function. The special terminal device may also be referred to as a head terminal, an anchor terminal, or the like. For example, the special terminal device may include a terminal device that has a function of managing addition or deletion of UE in a group, and/or the special terminal device may be a terminal device that communicates with the base station to exchange a status of another terminal device. Alternatively, the special terminal device may be a terminal device that has an RRC link to the base station and that proactively requests to be used as a special terminal device, a special terminal device specified by the base station, or a predefined special terminal device. For example, a header vehicle in a vehicle platoon may be used as the special terminal device.

S1002: The first terminal device receives the first indication, and determines, based on the first indication, a first BWP that is used for sidelink communication in the first time unit, where the first BWP is a BWP for broadcasting a sidelink signal. The BWP for broadcasting the sidelink signal may also be referred to as a BWP for sidelink communication in which a broadcast service is performed, or a BWP for sidelink communication of which a transmission type is broadcasting.

S1003: The second terminal device receives the first indication, and determines, based on the first indication, the first BWP that is used for the sidelink communication in the first time unit.

Optionally, to implement the sidelink communication in the first time unit by using the first BWP, the terminal device may need to activate the BWP. Specifically, if a BWP activated by the terminal device in a time unit before the first time unit is not the first BWP, the terminal device needs to activate (or switch) the first BWP, to ensure that the terminal device performs the sidelink communication in the first time unit by using the first BWP. There is a delay in activating or switching a BWP. For example, a BWP switching delay may vary when different frame structure numerologies are used. For the BWP switching delay, the terminal device may have two capabilities. One capability is to support a BWP switching delay of a type 1, and the other capability is to support a BWP switching delay of a type 2. For example, details are shown in the following Table 4.

**Table 4 BWP switching delay**

| *µ* | Slot length (ms) | BWP switching delay | |
|---|---|---|---|
| | | Type 1 (type 1) | Type 2 (type 2) |
| 0 | 1 | 1 | 3 |
| 1 | 0.5 | 2 | 5 |
| 2 | 0.25 | 3 | 9 |
| 3 | 0.125 | 6 | 17 |

It should be noted that, in Table 4, if BWP switching includes a subcarrier spacing change, the BWP switching delay may be determined based on a larger value between a subcarrier spacing before the BWP switching and a subcarrier spacing after the BWP switching.

It may be understood that, in the foregoing description, if the terminal device does not operate in the first BWP before the first time unit, the first terminal device needs to activate (or switch) the first BWP before the first time unit, and the activating the first BWP may be activating a first BWP used for sidelink communication, namely, a first BWP used for communication between terminals. On a physical layer, "activation" may be implemented by enabling/disabling a radio frequency, adjusting a filter tap coefficient, or the like. For example, activating a BWP may refer to enabling a radio frequency of the corresponding BWP, or activating a BWP may refer to adjusting a filter tap coefficient of the corresponding BWP. It should be noted that the activating a BWP may be activating a BWP for transmitting a sidelink signal or activating a BWP for receiving a sidelink signal. In this embodiment of this application, the activating the BWP for transmitting a sidelink signal and the activating the BWP for receiving a sidelink signal are collectively referred to as activating the BWP.

Alternatively, in this embodiment of this application, the network device and/or the terminal device may determine the first time unit based on a preconfiguration parameter. In other words, the network device may not need to send the first indication. Optionally, the network device may be a network management system. For example, the network management system may write the preconfiguration parameter into a SIM/USIM of the terminal device, and the terminal device may obtain the configuration parameter by reading the SIM card. Alternatively, the network management system may send the preconfiguration parameter to mobile equipment (mobile equipment, ME) of the terminal device.

Correspondingly, in this embodiment of this application, S1001 may be replaced with: The network device determines the first time unit based on the preconfiguration parameter. S1002 may be replaced with: The first terminal device determines the first time unit based on the preconfiguration parameter. S1003 may be replaced with: The second terminal device determines the first time unit based on the preconfiguration parameter.

S1004: The first terminal device sends a sidelink signal in the first BWP in the first time unit.

S1005: The second terminal device receives the sidelink signal in the first BWP in the first time unit.

Specifically, the first terminal device sends the sidelink signal to one or more receive-end UEs in the first BWP, where the one or more receive-end UEs include the second terminal device. Correspondingly, the second terminal device may receive, in the first BWP, sidelink signals sent by one or more transmit-end UEs, where the one or more transmit ends include the first terminal device, and the sidelink signals may include at least one of a reference signal, a PSSCH, a PSCCH, a PSDCH, a PSBCH, a PSUCCH, or the like.

Optionally, in the procedure shown in FIG. 10, the network device may send the configuration parameter for the BWP to the first terminal device and the second terminal device. The configuration parameter includes one or more of a frame structure numerology, a waveform used to transmit a sidelink signal, an uplink-downlink configuration, and the like. The uplink-downlink configuration refers to a ratio of a time unit used for uplink transmission to a time unit used for downlink transmission in a period of time.

In an SL scenario in which a plurality of frame structure numerologies are supported, it is assumed that a terminal device (for example, the first terminal device and the second terminal device) supports sending and/or receiving performed by using only one type of frame structure numerology at a moment. If there is communication of a broadcast signal at the moment, only broadcast is supported at the moment, or unicast and multicast are also supported while the broadcast is supported, but frame structure numerologies for the unicast and multicast need to be the same as a frame structure numerology for the broadcast.

Optionally, for a resource pool, the terminal device may perform unicast, multicast, or broadcast communication in the resource pool. That is, a shared resource pool is used for the unicast, multicast, or broadcast. Alternatively, resource pools of unicast, multicast, or broadcast may be independent. The terminal device performs unicasting in a unicast resource pool, and/or performs multicasting in a multicast resource pool, and/or performs broadcasting in a broadcast resource pool.

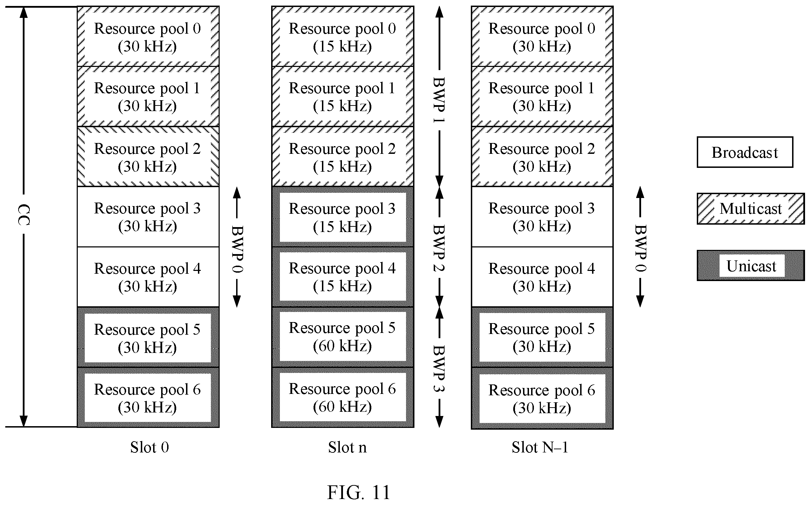

For example, as shown in FIG. 11, independent resource pools are used as an example. A resource block filled in white is a sidelink communication resource for a broadcast signal, a resource block filled in slashes is a sidelink communication resource for a multicast signal, and a resource block filled in black is a sidelink communication resource for a unicast signal. A configuration period is N slots, indexes of the N slots may be sequentially 0 to N-1, slots included in the first time unit are a slot 0 and a slot N-1, and slots included in the second time unit are a slot 1 to a slot N-2. For example, in the example shown in FIG. 11, an example in which a slot n represents any one of the slot 1 to the slot N-2 is used.

In the slot 0 and the slot N-1, frame structure numerologies of all resource pools or BWPs are the same as a frame structure numerology, for example, 30 kHz, of a resource for a broadcast signal. However, in a slot other than the slot 0 and the slot N-1, for example, the slot n, resource pools or BWPs corresponding to one or more frame structure numerologies may be configured for the terminal device, and the frame structure numerologies may be the same as or different from a frame structure numerology for broadcast. For example, a frame structure numerology of a BWP 1 (including a resource pool 0, a resource pool 1, and a resource pool 2) is 15 kHz, a frame structure numerology of a BWP 2 (including a resource pool 3 and a resource pool 4) is 30 kHz, a frame structure numerology of a BWP 3 (including a resource pool 5 and a resource pool 6) is 60 kHz, and the like.

In this embodiment of this application, for sidelink communication, unicast, multicast, and broadcast communication using a plurality of frame structure numerologies can be supported, thereby improving transmission performance. Sidelink communication in NR can meet requirements of various different services, such as unicast, multicast, and broadcast, to implement transmission using different frame structure numerologies.

Optionally, in S 1004, the first terminal device needs to determine an SL sending resource when the first terminal device sends the sidelink signal in the first BWP in the first time unit. Specifically, the first terminal device sends an SL signal on the SL sending resource. In this embodiment of this application, the terminal device may determine the SL sending resource based on a UE autonomous selection mode, or the terminal device may determine the SL sending resource based on a base station scheduling mode, or may determine the SL resource based on another mode.

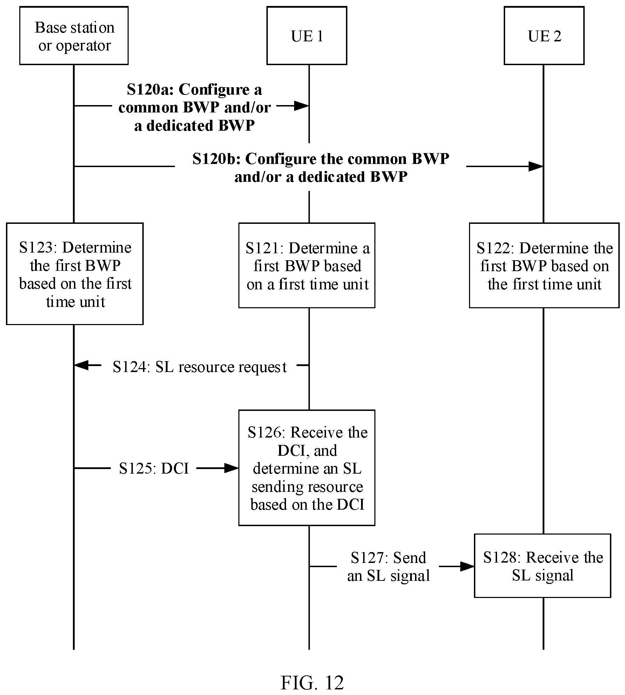

As shown in FIG. 12, a procedure of a communication method is provided. In the procedure, an SL sending resource is determined based on a base station scheduling mode. The procedure includes the following steps.

S120a: A base station or an operator configures a common BWP and/or a dedicated BWP for UE 1.

S120b: The base station or the operator configures the common BWP and/or a dedicated BWP for UE 2.

In this embodiment of this application, the common BWP may include a system common BWP and a preconfigured BWP. For example, the base station or the operator may configure a system common BWP for the UE 1 and/or the UE 2 through a system message, and/or the base station or the operator may configure a preconfigured BWP for the UE 1 and/or a preconfigured BWP for the UE 2 through preconfiguration signaling, and/or the base station or the operator may configure a dedicated BWP for the UE 1 and/or a dedicated BWP for the UE 2 through dedicated signaling.

S121: The UE 1 determines a first BWP based on a first time unit.

S122: The UE 2 determines the first BWP based on the first time unit.

The first BWP is a common BWP, or the first BWP is a dedicated BWP, and a frame structure numerology of the dedicated BWP is the same as a frame structure numerology of the common BWP.

S123: The base station or the operator determines, based on the first time unit, the first BWP used by the terminal device to perform sidelink communication in the first time unit.

S124: The UE 1 sends an SL resource request to the base station or the operator.

S125: The base station or the operator receives the SL resource request, and sends DCI to the UE 1, where the DCI is used to indicate an SL sending resource allocated by a network device in the first BWP to the UE 1.

S126: The UE 1 receives the DCI, and determines the SL sending resource based on the DCI.

Optionally, the network device may scramble the DCI by using a radio network temporary identifier (radio network temporary identifier, RNTI). When receiving the DCI, a terminal device may descramble the DCI based on the RNTI and perform a cyclic redundancy check (cyclic redundancy check, CRC). If the check succeeds, it indicates that the DCI is DCI of the terminal device.

S127: The UE 1 sends an SL signal on the SL sending resource in the first time unit, where the SL signal includes SCI, data, SFCI, and/or the like.

S128: The UE 2 receives the SL signal in the first BWP in the first time unit.

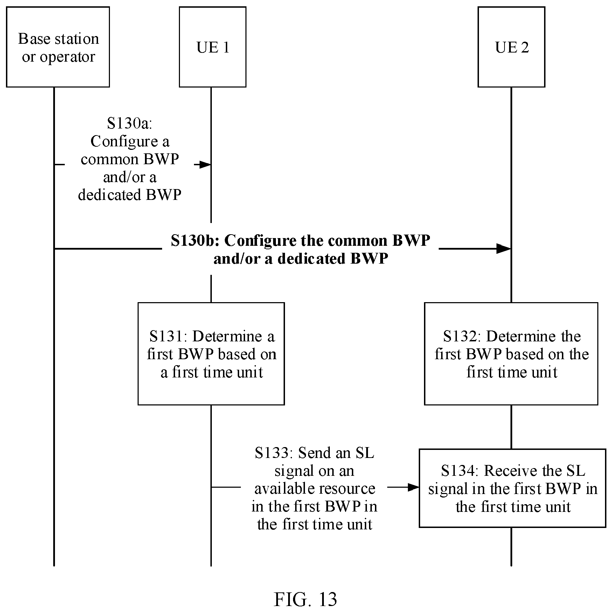

As shown in FIG. 13, a procedure of a communication method is provided. In the procedure, an SL sending resource is determined based on a UE autonomous selection mode. The procedure includes the following steps.

S130a: A base station or an operator configures a common BWP and/or a dedicated BWP for UE 1.

S130b: The base station or the operator configures the common BWP and/or a dedicated BWP for UE 2.

S131: The UE 1 determines a first BWP based on a first time unit.

S132: The UE 2 determines the first BWP based on the first time unit.

S133: The UE 1 perceives an available resource in the first BWP, and sends an SL signal on the available resource in the first BWP in the first time unit.

S134: The UE 2 receives the SL signal in the first BWP in the first time unit.

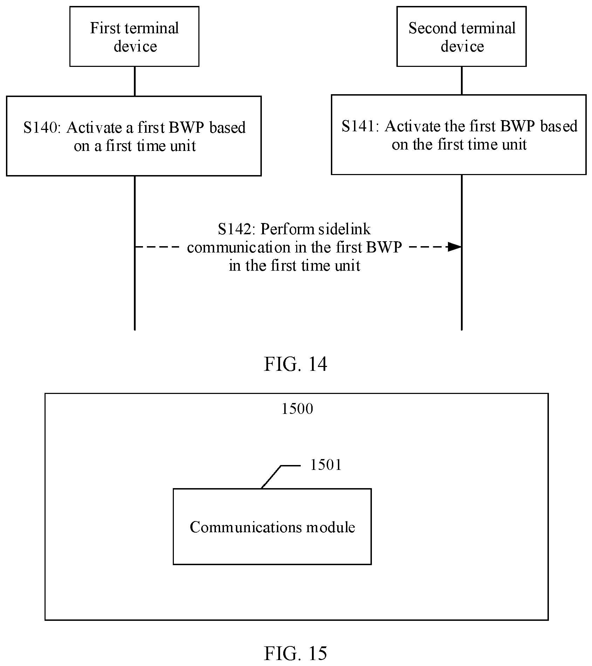

As shown in FIG. 14, a communication procedure is provided. In the procedure, a first terminal device may be the transmit-side terminal device 101 in FIG. 1, a second terminal device may be the receive-side terminal device 102 in FIG. 1, and a network device may be the access network device 103 or the network management system 104 in FIG. 1. The procedure is described by using an example in which a first BWP is activated in a first time unit. The procedure may be specifically as follows:

S140: The first terminal device activates the first BWP based on the first time unit, where for explanation of the first BWP, refer to the foregoing description, and details are not described herein again.

S141: The second terminal device activates the first BWP based on the first time unit.

Optionally, activating a BWP based on the first time unit may mean that to implement that a BWP activated in the first time unit is the first BWP, if a BWP activated by the terminal device in a time unit before the first time unit is not the first BWP, the terminal device needs to activate (or switch) the BWP to ensure that the BWP activated in the first time unit is the first BWP. That is, the terminal device activates the BWP based on the first time unit.

Optionally, for example, activating a BWP based on the first time unit may mean that if a BWP activated by the terminal device is not the first BWP, in a time unit that is before the first time unit, where a time interval between the time unit and the first time unit corresponds to a BWP switching delay, the terminal device needs to activate the first BWP. Optionally, for example, the terminal device may activate a second BWP in a time unit in which the first time unit ends or a time unit that is after the first time unit.

Optionally, the procedure shown in FIG. 14 may further include S142: The UE 1 and the UE 2 perform sidelink communication in the first BWP in the first time unit. The procedure shown in FIG. 14 is applicable to a UE autonomous selection mode, a base station scheduling mode, or another SL resource determining mode. This is not limited herein.

It may be understood that, in the embodiments of this application, the foregoing examples may be used separately, or different examples may be used in combination. A manner of using the examples separately or in combination is within the protection scope of this application.

In the embodiments of this application, the method provided in the embodiments of this application is described from perspectives of the network device, the terminal, and interaction between the network device and the terminal. To implement the foregoing functions in the method provided in the embodiments of this application, the network device and the terminal may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint condition of the technical solutions.

Same as the foregoing concept, as shown in FIG. 15, an embodiment of this application further provides an apparatus 1500, configured to implement a function of the terminal device in the foregoing method. The apparatus may be a terminal device or an apparatus in a terminal device. The apparatus may be a chip system. In this embodiment of this application, the chip system may include a chip, or may include a chip and another discrete component. The apparatus 1500 may include:
a communications module 1501, configured to perform sidelink communication in a first carrier bandwidth part BWP in a first time unit.

For a specific execution process of the communications module 1501, refer to the descriptions in the foregoing method embodiment. In the embodiments of this application, division into modules is an example, and is merely logical function division. During actual implementation, there may be another division manner. In addition, in each embodiment of this application, functional modules may be integrated into one processor, or each of the modules may exist alone physically, or two or more modules may be integrated into one module. The integrated module may be implemented in a form of hardware, or may be implemented in a form of a software functional module.

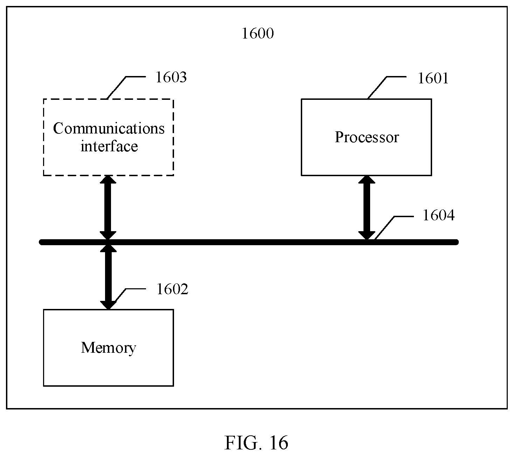

Same as the foregoing conception, as shown in FIG. 16, an embodiment of this application provides an apparatus 1600, configured to implement a function of the terminal device in the foregoing method. The apparatus may be a terminal device or may be an apparatus in a terminal device.

The apparatus 1600 includes at least one processor 1601, configured to implement the function of the terminal device in the foregoing method. For example, the processor 1601 may perform sidelink communication in a first BWP in a first time unit. For details, refer to detailed descriptions in the method. Details are not described herein again.

The apparatus 1600 may further include at least one memory 1602, configured to store program instructions and/or data. The memory 1602 is coupled to the processor 1601. Couplings in the embodiments of this application are indirect couplings or communication connections between apparatuses, units, or modules, may be in an electrical form, a mechanical form, or another form, and are used for information exchange between the apparatuses, the units, or the modules. The processor 1601 may operate in collaboration with the memory 1602. The processor 1601 may execute the program instructions stored in the memory 1602. At least one of the at least one memory may be included in the processor.

The apparatus 1600 may further include a communications interface 1603, configured to communicate with another device through a transmission medium, so that an apparatus in the apparatus 1600 may communicate with the another device. For example, the communications interface 1603 may be configured to: send a sidelink signal to another terminal device, or receive a sidelink signal sent by another terminal device, or the like in the first BWP in the first time unit. For example, the communications interface 1603 may be a transceiver, a circuit, a bus, a module, or a communications interface of another type. The another device may be a second terminal device or a network device. The processor 1601 receives and sends data through the communications interface 1603, and is configured to implement the methods in the foregoing embodiments.

In this embodiment of this application, a connection medium between the communications interface 1603, the processor 1601, and the memory 1602 is not limited. In this embodiment of this application, in FIG. 16, the memory 1602, the processor 1601, and the communications interface 1603 are connected by using a bus 1604. The bus is represented by using a thick line in FIG. 16. A manner of connection between other components is merely an example for description, and is not limited thereto. The bus may be categorized as an address bus, a data bus, a control bus, and the like. For ease of representation, only one thick line is used for representation in FIG. 16, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware and a software module that are in the processor.

In the embodiments of this application, the memory may be a non-volatile memory, for example, a hard disk drive (hard disk drive, HDD) or solid-state drive (solid-state drive, SSD); or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in the embodiments of this application may alternatively be a circuit or any other apparatus that can implement a storage function, and is configured to store program instructions and/or data.

All or some of the methods provided in the embodiments of this application may be implemented by software, hardware, firmware, or any combination thereof. When software is used to implement the methods, the methods may be implemented completely or partially in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application which is defined by the scope of the appended claims. This application is intended to cover these modifications and variations of this application provided that they fall within the scope of the following claims of this application.

In the embodiments of this application, "at least one" refers to one or more, and "a plurality of" refers to two or more than two. "And/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, at least one of a, b, or c may indicate: a, b, c, a and b, a and c, b and c, or a, b, and c, and a, b, and c may be singular or plural.

## Claims

1. A communication method, comprising:
performing (S301) sidelink communication in a first carrier bandwidth part, BWP, in a first time unit; and
receiving (S702) a first indication, wherein:
the first indication is used to indicate a time unit that is configured as the first time unit in a period whose length is N time units, wherein N is a positive integer greater than or equal to 1; or
the first indication is used to indicate at least one of a configuration period a transmission offset, and/or a quantity of first time units,
wherein a first frame structure numerology is used for the sidelink communication in the first time unit, the first frame structure numerology is the same as a frame structure numerology of a common BWP, the first BWP is a first dedicated BWP, a frame structure numerology of the first dedicated BWP is the same as the frame structure numerology of the common BWP, and bandwidth of the first dedicated BWP comprises bandwidth of the common BWP; wherein:
the first indication is used to indicate a first time unit corresponding to a reference frame structure numerology; and the method further comprises:
determining, based on the reference frame structure numerology, the first frame structure numerology, and the first time unit corresponding to the reference frame structure numerology, the first time unit corresponding to the first frame structure numerology, wherein the first frame structure numerology is a frame structure numerology of the first BWP.

2. The method according to claim 1, wherein the method further comprises:
performing (S302) sidelink communication in a second dedicated BWP in a second time unit by using a second frame structure numerology, wherein
the second frame structure numerology is a frame structure numerology of the second dedicated BWP.

3. The method according to claim 2, wherein the sidelink communication in the first time unit comprises broadcast, and the sidelink communication in the second time unit comprises unicast and/or multicast.

4. The method according to claim 3, wherein the sidelink communication in the first time unit further comprises unicast and/or multicast.

5. The method according to any one of claim 2 to 4, wherein the method further comprises:
determining, based on the reference frame structure numerology, the second frame structure numerology, and the first time unit corresponding to the reference frame structure numerology, the first time unit corresponding to the second frame structure numerology, wherein the second frame structure numerology is the frame structure numerology of the second dedicated BWP.

6. The method according to any one of claims 1 to 5, further comprising:
sending (S701) the first indication to a first terminal device and a second terminal device.

7. An apparatus (1500), configured to implement the method according to any one of claims 1 to 6.

8. A computer-readable storage medium (1602), comprising instructions, wherein when the instructions are run on a computer, the computer is enabled to perform the method according to any one of claims 1 to 6.

## Patentansprüche

1. Kommunikationsverfahren, das Folgendes umfasst:
Durchführen (S301) einer Sidelink-Kommunikation in einem ersten Trägerbandbreitenteil, BWP, in einer ersten Zeiteinheit; und
Empfangen (S702) einer ersten Angabe, wobei:
die erste Angabe verwendet wird, um eine Zeiteinheit anzugeben, die als die erste Zeiteinheit in einer Periode konfiguriert ist, deren Länge N Zeiteinheiten beträgt, wobei N eine positive ganze Zahl größer als oder gleich 1 ist; oder
die erste Angabe verwendet wird, um mindestens eines einer Konfigurationsperiode, eines Übertragungsversatzes und/oder einer Anzahl von ersten Zeiteinheiten anzugeben,
wobei eine erste Framestrukturnumerologie für die Sidelink-Kommunikation in der ersten Zeiteinheit verwendet wird, die erste Framestrukturnumerologie die gleiche wie eine Framestrukturnumerologie eines gemeinsamen BWP ist, der erste BWP ein erster dedizierter BWP ist, eine Framestrukturnumerologie des ersten dedizierten BWP die gleiche wie die Framestrukturnumerologie des gemeinsamen BWP ist und die Bandbreite des ersten dedizierten BWP eine Bandbreite des gemeinsamen BWP umfasst; wobei:
die erste Angabe verwendet wird, um eine erste Zeiteinheit anzugeben, die einer Referenzframestrukturnumerologie entspricht; und wobei das Verfahren ferner Folgendes umfasst:
Bestimmen, basierend auf der Referenzframestrukturnumerologie, der ersten Framestrukturnumerologie und der ersten Zeiteinheit, die der Referenzframestrukturnumerologie entspricht, der ersten Zeiteinheit, die der ersten Framestrukturnumerologie entspricht, wobei die erste Framestrukturnumerologie eine Framestrukturnumerologie des ersten BWP ist.

2. Verfahren nach Anspruch 1, wobei das Verfahren ferner Folgendes umfasst:
Durchführen (S302) einer Sidelink-Kommunikation in einem zweiten dedizierten BWP in einer zweiten Zeiteinheit unter Verwendung einer zweiten Framestrukturnumerologie, wobei
die zweite Framestrukturnumerologie eine Framestrukturnumerologie des zweiten dedizierten BWP ist.

3. Verfahren nach Anspruch 2, wobei die Sidelink-Kommunikation in der ersten Zeiteinheit Broadcast umfasst und die Sidelink-Kommunikation in der zweiten Zeiteinheit Unicast und/oder Multicast umfasst.

4. Verfahren nach Anspruch 3, wobei die Sidelink-Kommunikation in der ersten Zeiteinheit ferner Unicast und/oder Multicast umfasst.

5. Verfahren nach einem der Ansprüche 2 bis 4, wobei das Verfahren ferner Folgendes umfasst:
Bestimmen, basierend auf der Referenzframestrukturnumerologie, der zweiten Framestrukturnumerologie und der ersten Zeiteinheit, die der Referenzframestrukturnumerologie entspricht, der ersten Zeiteinheit, die der zweiten Framestrukturnumerologie entspricht, wobei die zweite Framestrukturnumerologie die Framestrukturnumerologie des zweiten dedizierten BWP ist.

6. Verfahren nach einem der Ansprüche 1 bis 5, das ferner Folgendes umfasst:
Senden (S701) der ersten Angabe an ein erstes Endgerät und ein zweites Endgerät.

7. Vorrichtung (1500), die dazu konfiguriert ist, das Verfahren nach einem der Ansprüche 1 bis 6 zu implementieren.

8. Computerlesbares Speichermedium (1602), das Anweisungen umfasst, wobei, wenn die Anweisungen auf einem Computer ausgeführt werden, der Computer dazu befähigt wird, das Verfahren nach einem der Ansprüche 1 bis 6 durchzuführen.

## Revendications

1. Procédé de communication, comprenant :
la réalisation (S301) d'une communication de liaison latérale dans une première partie de largeur de bande, BWP, porteuse dans une première unité de temps ; et
la réception (S702) d'une première indication, dans lequel :
la première indication est utilisée pour indiquer une unité de temps configurée comme première unité de temps dans une période dont la longueur est N unités de temps, où N est un entier positif supérieur ou égal à 1 ; ou
la première indication est utilisée pour indiquer au moins une période de configuration, un décalage d'émission, et/ou une quantité de premières unités de temps,
dans lequel une première numérologie de structure de trame est utilisée pour la communication de liaison latérale dans la première unité de temps, la première numérologie de structure de trame est la même qu'une numérologie de structure de trame d'une BWP commune, la première BWP est une première BWP dédiée, une numérologie de structure de trame de la première BWP dédiée est la même que la numérologie de structure de trame de la BWP commune, et une largeur de bande de la première BWP dédiée comprend une larguer de bande de la BWP commune ; dans lequel :
la première indication est utilisée pour indiquer une première unité de temps correspondant à une numérologie de structure de trame de référence ; et le procédé comprend en outre :
la détermination, sur la base de la numérologie de structure de trame de référence, de la première numérologie de structure de trame et de la première unité de temps correspondant à la numérologie de structure de trame de référence, de la première unité de temps correspondant à la numérologie de structure de trame, la première numérologie de structure de trame étant une numérologie de structure de trame de la première BWP.

2. Procédé selon la revendication 1, dans lequel le procédé comprend en outre :
la réalisation (S302) d'une communication de liaison latérale dans une deuxième BWP dédiée dans une deuxième unité de temps en utilisant une deuxième numérologie de structure de trame, dans lequel
la deuxième numérologie de structure de trame est une numérologie de structure de trame de la deuxième BWP dédiée.

3. Procédé selon la revendication 2, dans lequel la communication de liaison latérale dans la première unité de temps comprend une diffusion, et la communication de liaison latérale dans la deuxième unité de temps comprend une diffusion unique et/ou une multidiffusion.

4. Procédé selon la revendication 3, dans lequel la communication de liaison latérale dans la première unité de temps comprend en outre une diffusion unique et/ou une multidiffusion.

5. Procédé selon l'une quelconque des revendications 2 à 4, dans lequel le procédé comprend en outre :
la détermination, sur la base de la numérologie de structure de trame de référence, de la deuxième numérologie de structure de trame et de la première unité de temps correspondant à la numérologie de structure de trame de référence, de la première unité de temps correspondant à la deuxième numérologie de structure de trame, la deuxième numérologie de structure de trame étant la numérologie de structure de trame de la deuxième BWP dédiée.

6. Procédé selon l'une quelconque des revendications 1 à 5, comprenant en outre :
l'envoi (S701) de la première indication à un premier dispositif terminal et à un deuxième dispositif terminal.

7. Appareil (1500), configuré pour mettre en œuvre le procédé selon l'une quelconque des revendications 1 à 6.

8. Support de stockage lisible par ordinateur (1602), comprenant des instructions, dans lequel, lorsque les instructions sont exécutées sur un ordinateur, l'ordinateur peut exécuter le procédé selon l'une quelconque des revendications 1 à 6.
